(19) Europäisches Patentamt
European Patent Office
Office européen des brevets

(11) **EP 4 478 089 A1**

(12) **EUROPEAN PATENT APPLICATION**
published in accordance with Art. 153(4) EPC

(43) Date of publication:
**18.12.2024 Bulletin 2024/51**

(21) Application number: **23855127.9**

(22) Date of filing: **14.08.2023**

(51) International Patent Classification (IPC):
*G01S 17/34* (2020.01)      *G01S 7/4913* (2020.01)
*G01S 7/497* (2006.01)      *G01S 17/894* (2020.01)
*G01S 17/10* (2020.01)      *G01S 7/4865* (2020.01)
*G01S 7/481* (2006.01)

(52) Cooperative Patent Classification (CPC):
**G01S 7/481; G01S 7/4865; G01S 7/4913;
G01S 7/497; G01S 17/10; G01S 17/34;
G01S 17/894**

(86) International application number:
**PCT/KR2023/012038**

(87) International publication number:
**WO 2024/039160 (22.02.2024 Gazette 2024/08)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority: **18.08.2022 KR 20220103506
16.09.2022 KR 20220117382**

(71) Applicant: **Samsung Electronics Co., Ltd
Suwon-si, Gyeonggi-do 16677 (KR)**

(72) Inventors:
• **LEE, Taehee
Suwon-si Gyeonggi-do 16677 (KR)**
• **GWAK, Jinpyo
Suwon-si Gyeonggi-do 16677 (KR)**

(74) Representative: **Gulde & Partner
Patent- und Rechtsanwaltskanzlei mbB
Wallstraße 58/59
10179 Berlin (DE)**

(54) **LIDAR SENSOR BASED ON ITOF SENSOR, AND CONTROL METHOD THEREFOR**

(57)    A Lidar sensor includes a light emitting unit, an indirect time of flight (iToF) sensor, and one or more processors configured to: output light of a first frequency and light of a second frequency while the Lidar sensor rotates, based on the output light of the first frequency and the output light of the second frequency being reflected by an object and received by a plurality of pixels, acquire first pixel values based on the reflected light of the first frequency, and acquire second pixel values based on the reflected light of the second frequency, identify third pixel values from among the first pixel values using reliability levels of the first pixel values and identify fourth pixel values from among the second pixel values using reliability levels of the second pixel values, and identify a distance between the Lidar sensor and the object.

FIG. 1

**Description**

[Technical Field]

Apparatuses and methods consistent with the disclosure relate to a Lidar sensor and a method of controlling the same, and more particularly, to a Lidar sensor for performing a function of identifying a distance to an object using an iToF sensor and a method of controlling the same.

[Background Art]

Recently, Lidar sensors are being used in various fields. In particular, the Lidar sensor may detect objects around a user and identify a distance between the object and the user, thereby preventing accidents, which the user is not aware of, in advance, and furthermore enabling autonomous driving of various electronic devices.

Meanwhile, a ToF sensor is used to identify the distance to the object in the Lidar sensor. The ToF sensor may be divided into a direct time of flight (dToF) sensor and an indirect time of flight (iToF) sensor according to its operation method. The dToF sensor-based Lidar sensor identifies the distance between the object and the Lidar sensor based on a time of flight required for light output from the Lidar sensor to be reflected and received by the object. In this case, the dToF sensor requires a single-photon avalanche diode (SPAD) device for high-speed measurement of the time of flight of light, which causes a problem in that the manufacturing cost of the Lidar sensor becomes expensive. In addition, for long-distance measurement, a size of a plano-convex lens that collects the light reflected by the object of the dToF sensor needs to be larger, which causes a problem in that the manufacturing cost of the Lidar sensor becomes expensive and another problem in that the Lidar sensor based on the dToF sensor may not be mounted on a small electronic device.

[Disclosure]

[Technical Solution]

According to an aspect of the disclosure, a Lidar sensor includes a light emitting unit, an indirect time of flight (iToF) sensor comprising a plurality of pixels, and one or more processors configured to: output light of a first frequency and light of a second frequency greater than the first frequency through the light emitting unit while the Lidar sensor rotates, based on the output light of the first frequency and the output light of the second frequency being reflected by an object and received by the plurality of pixels, acquire a plurality of first pixel values based on the reflected light of the first frequency, and acquire a plurality of second pixel values based on the reflected light of the second frequency, identify a plurality of third pixel values from among the plurality of first pixel values using reliability levels of the plurality of first pixel values determined based on a size of the plurality of first pixel values and identify a plurality of fourth pixel values from among the plurality of second pixel values using reliability levels of the plurality of second pixel values determined based on a size of the plurality of second pixel values, and identify a distance between the Lidar sensor and the object based on at least one of a first distance value acquired based on the plurality of third pixel values and a second distance value acquired based on the plurality of fourth pixel values.

The one or more processors may be further configured to: identify the plurality of third pixel values each having a reliability level greater than or equal to a first preset value from among the plurality of first pixel values based on the reliability levels of the plurality of first pixel values, and identify the plurality of fourth pixel values each having a reliability level greater than or equal to a second preset value from among the plurality of second pixel values based on the reliability levels of the plurality of second pixel values, and wherein each of the reliability levels of the plurality of first pixel values and the reliability levels of the plurality of second pixel values is higher as a size of a pixel value of the plurality of first pixel values and the plurality of the second pixel values increases.

The one or more processors may be further configured to acquire a plurality of filtered pixels by applying a filter having a preset size to the plurality of pixels, and identify the plurality of third pixel values and the plurality of fourth pixel values based on pixel values of the plurality of filtered pixels.

The one or more processors may be further configured to: identify a plurality of first distance values based on the plurality of third pixel values and identify the first distance value based on an average value of the plurality of identified first distance values, and identify a plurality of second distance values based on the plurality of fourth pixel values and identify the second distance value based on the average value of the plurality of identified second distance values.

The one or more processors may be further configured to: identify, as the first distance value, a distance value corresponding to the largest reliability level among a plurality of first distance values identified based on the plurality of third pixel values, and identify, as the second distance value, a distance value corresponding to the largest reliability level among a plurality of second distance values identified based on the plurality of fourth pixel values.

The one or more processors may be further configured to: determine a compensation value based on the first distance value and the second frequency based on a difference between the first distance value and the second distance value being greater than or equal to a preset value, compensate for the second distance value based on the determined compensation value, and identify the compensated second distance value as the distance between the Lidar sensor and the object.

The one or more processors may be further configured to identify the second distance value as the distance between the Lidar sensor and the object based on a difference between the first distance value and the second distance value being less than a preset value.

The one or more processors may be further configured to: output the light of the first frequency and the light of the second frequency at each preset time interval to identify the distance between the Lidar sensor and the object, and based on a difference between a distance identified at a first time and a distance identified at a second time among distances identified at each preset time interval being greater than or equal to a preset value, identify the distance between the Lidar sensor and the object at the second time based on the first distance value, and wherein the second time is a time after the preset time interval from the first time.

The plurality of first pixel values corresponding to one of the plurality of pixels may include a first value and a second value, and the plurality of second pixel values corresponding to one of the plurality of pixels may include a third value and a fourth value, and the one or more processor may be further configured to identify each of the reliability levels of the plurality of first pixel values and the reliability levels of the plurality of second pixel values based on the following Equations, respectively.

$$\text{Reliability level of first pixel value} = \sqrt{(first\ value)^2 + (\sec ond\ value)^2}$$

$$\text{Reliability level of second pixel value} = \sqrt{(third\ value)^2 + (fourth\ value)^2}$$

Each of the plurality of pixels may include a plurality of receptors configured to be activated at preset time intervals.

According to an aspect of the disclosure, a method of controlling a Lidar sensor including an indirect time of flight (iToF) sensor includes outputting light of a first frequency and light of a second frequency greater than the first frequency through a light emitting unit of the Lidar sensor while the Lidar sensor rotates; receiving the light of the first frequency and the light of the second frequency reflected by an object through a plurality of pixels included in the iToF sensor; acquiring a plurality of first pixel values based on the reflected light of the first frequency and acquiring a plurality of second pixel values based on the reflected light of the second frequency; identifying a plurality of third pixel values from among the plurality of first pixel values using reliability levels of the plurality of first pixel values determined based on a size of the plurality of first pixel values; identifying a plurality of fourth pixel values from among the plurality of second pixel values using reliability levels of the plurality of second pixel values determined based on a size of the plurality of second pixel values; and identifying a distance between the Lidar sensor and the object based on at least one of a first distance value acquired based on the plurality of third pixel values and a second distance value acquired based on the plurality of fourth pixel values.

The identifying of the plurality of third pixel values may include identifying the plurality of third pixel values each having a reliability level greater than or equal to a first preset value from among the plurality of first pixel values based on the reliability levels of the plurality of first pixel values, the identifying of the plurality of fourth pixel values may include identifying the plurality of fourth pixel values each having a reliability level greater than or equal to a second preset value from among the plurality of second pixel values based on the reliability levels of the plurality of second pixel values, and each of the reliability levels of the plurality of first pixel values and the reliability levels of the plurality of second pixel values may be higher as a size of a pixel value of the plurality of first pixel values and the plurality of the second pixel values increases.

The method may further include acquiring a plurality of filtered pixels by applying a filter having a preset size to the plurality of pixels, the identifying of the plurality of third pixel values may include identifying the plurality of third pixel values based on the first pixel values of the plurality of filtered pixels, and the identifying of the plurality of fourth pixel values may include identifying the plurality of fourth pixel values based on the second pixel values of the plurality of filtered pixels.

The identifying of the distance may include identifying a plurality of first distance values based on the plurality of third pixel values and identifying the first distance value based on an average value of the plurality of identified first distance values; and identifying a plurality of second distance values based on the plurality of fourth pixel values and identifying the second distance value based on the average value of the plurality of identified second distance values.

The identifying of the distance may include identifying, as the first distance value, a distance value corresponding to the largest reliability level among a plurality of first distance values identified based on the plurality of third pixel values,

and identifying, as the second distance value, a distance value corresponding to the largest reliability level among a plurality of second distance values identified based on the plurality of fourth pixel values.

The identifying of the distance may include determining a compensation value based on the first distance value and the second frequency based on a difference between the first distance value and the second distance value being greater than or equal to a preset value, compensating for the second distance value based on the determined compensation value, and identifying the compensated second distance value as the distance between the Lidar sensor and the obj ect.

The identifying of the distance may include identifying the second distance value as the distance between the Lidar sensor and the object based on a difference between the first distance value and the second distance value being less than a preset value.

The outputting of the light of a first frequency and the light of a second frequency may include outputting the light of the first frequency and the light of the second frequency at each preset time interval to identify the distance between the Lidar sensor and the object, the identifying of the distance may include, based on a difference between a distance identified at a first time and a distance identified at a second time among distances identified at each preset time interval being greater than or equal to a preset value, identifying the distance between the Lidar sensor and the object at the second time based on the first distance value, and the second time may be a time after the preset time interval from the first time.

The plurality of first pixel values corresponding to one of the plurality of pixels may include a first value and a second value, and the plurality of second pixel values corresponding to one of the plurality of pixels include a third value and a fourth value, and the method may further include determining each of the reliability levels of the plurality of first pixel values and the reliability levels of the plurality of second pixel values based on the following Equations, respectively.

$$\text{Reliability level of first pixel value} = \sqrt{(first\ value)^2 + (second\ value)^2}$$

$$\text{Reliability level of second pixel value} = \sqrt{(third\ value)^2 + (fourth\ value)^2}$$

According to an aspect of the disclosure, a non-transitory computer-readable recording medium stores instructions that cause a Lidar sensor including an indirect time of flight (iToF) sensor to perform a method of controlling the Lidar sensor, and the method includes outputting light of a first frequency and light of a second frequency greater than the first frequency through a light emitting unit of the Lidar sensor while the Lidar sensor rotates; receiving the light of the first frequency and the light of the second frequency reflected by an object through a plurality of pixels included in the iToF sensor; acquiring a plurality of first pixel values based on the reflected light of the first frequency and acquiring a plurality of second pixel values based on the reflected light of the second frequency; identifying a plurality of third pixel values from among the plurality of first pixel values using reliability levels of the plurality of first pixel values determined based on a size of the plurality of first pixel values; identifying a plurality of fourth pixel values from among the plurality of second pixel values using reliability levels of the plurality of second pixel values determined based on a size of the plurality of second pixel values; and identifying a distance between the Lidar sensor and the object based on at least one of a first distance value acquired based on the plurality of third pixel values and a second distance value acquired based on the plurality of fourth pixel values.

[Description of Drawings]

The above and/or other aspects of the disclosure will be more apparent by describing certain embodiments of the disclosure with reference to the accompanying drawings, in which:

FIG. 1 is a diagram for schematically describing a Lidar sensor according to an embodiment of the disclosure;
FIG. 2 is a schematic block diagram of the Lidar sensor according to an embodiment of the disclosure;
FIG. 3 is a diagram for describing a plurality of pixels included in an iToF sensor according to an embodiment of the disclosure;
FIG. 4 is a diagram illustrating a plurality of pixel values acquired from each of a plurality of pixels according to an embodiment of the disclosure;
FIG. 5 is a diagram illustrating a first pixel value corresponding to light of 5 MHz and a second pixel value corresponding to light of 100 MHz according to an embodiment of the disclosure;
FIG. 6 is a diagram illustrating a selection of a plurality of third pixel values based on a first reliability level and a plurality of fourth pixel values based on a second reliability level according to an embodiment of the disclosure;
FIG. 7 is a diagram for describing filtering of a plurality of pixels by applying a filter having a preset size to a plurality of pixels according to an embodiment of the disclosure;

FIG. 8 is a diagram for identifying a first distance value and a second distance value among a plurality of distance values corresponding to a plurality of first pixels and a plurality of distance values corresponding to a plurality of second pixels according to an embodiment of the disclosure;

FIG. 9 is a diagram illustrating a method of adjusting a distance between a Lidar sensor identified at a relatively late time and an object when a distance difference between the Lidar sensor identified at an adjacent time and the object is greater than or equal to a preset value according to an embodiment of the disclosure;

FIG. 10 is a diagram for describing a method of identifying a distance between a plurality of points of an object and a Lidar sensor based on a plurality of pixels classified into a plurality of pixel groups according to an embodiment of the disclosure;

FIG. 11 is a flowchart schematically illustrating a method of controlling a Lidar sensor based on an iToF sensor according to an embodiment of the disclosure;

FIG. 12 is a flowchart schematically illustrating a method of controlling a Lidar sensor based on an iToF sensor according to an embodiment of the disclosure; and

FIG. 13 is a schematic block diagram of a robot including a Lidar sensor based on an iToF sensor according to an embodiment of the disclosure.

[Mode for Invention]

After terms used in the present specification are briefly described, the disclosure will be described in detail.

General terms that are currently widely used were selected as terms used in embodiments of the disclosure in consideration of functions in the disclosure, but may be changed depending on the intention of those skilled in the art or a judicial precedent, the emergence of a new technique, and the like. In addition, in a specific case, terms arbitrarily chosen by an applicant may exist. In this case, the meaning of such terms will be mentioned in detail in a corresponding description portion of the disclosure. Therefore, the terms used in the disclosure should be defined on the basis of the meaning of the terms and the contents throughout the disclosure rather than simple names of the terms.

In the disclosure, an expression "have," "may have," "include," "may include," or the like, indicates existence of a corresponding feature (for example, a numerical value, a function, an operation, a component such as a part, or the like), and does not exclude existence of an additional feature.

An expression "at least one of A and/or B" is to be understood to represent "A" or "B" or "any one of A and B."

Expressions "first," "second," "1st" or "2nd" or the like, used in the disclosure may indicate various components regardless of a sequence and/or importance of the components, will be used only in order to distinguish one component from the other components, and do not limit the corresponding components.

When it is mentioned that any component (for example, a first component) is (operatively or communicatively} coupled with/to or is connected to another component (for example, a second component), it is to be understood that any component is directly coupled to another component or may be coupled to another component through the other component (for example, a third component).

Singular forms are intended to include plural forms unless the context clearly indicates otherwise. It will be further understood that terms "include" or "formed of" used in the present specification specify the presence of features, numerals, steps, operations, components, parts, or combinations thereof mentioned in the present specification, but do not preclude the presence or addition of one or more other features, numerals, steps, operations, components, parts, or combinations thereof.

In the disclosure, a "module" or a "-er/or" may perform at least one function or operation, and be implemented by hardware or software or be implemented by a combination of hardware and software. In addition, a plurality of "modules" or a plurality of "~ers/~ors" may be integrated in at least one module and be implemented by at least one processor (not illustrated) except for a "module" or a "-er/or" that needs to be implemented by specific hardware.

Hereinafter, the disclosure will be described in detail with reference to the accompanying drawings.

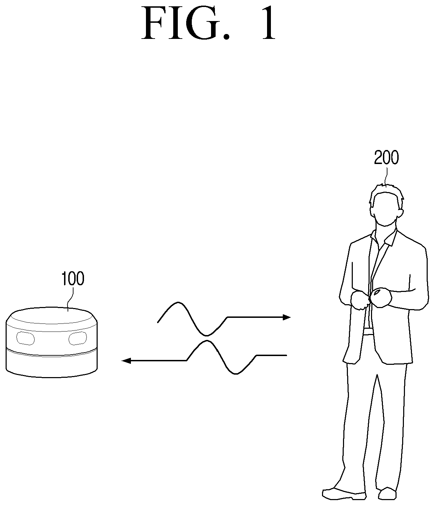

FIG. 1 is a diagram for schematically describing a Lidar sensor according to an embodiment of the disclosure.

Referring to FIG. 1, a Lidar sensor 100 according to an embodiment of the disclosure identifies a distance to an object 200 based on an indirect time of flight (iToF) sensor. Specifically, the Lidar sensor 100 identifies a distance between the Lidar sensor 100 and the object 200 based on a phase difference between light output from the Lidar sensor 100 and light received through an iToF sensor of the Lidar sensor 100.

In the case of a conventional Lidar sensor including a direct time of flight (dToF) sensor, the distance between the Lidar sensor 100 and the object 200 is identified based on the time required for light output from the Lidar sensor 100 to be received by the dToF sensor. That is, the Lidar sensor 100 including the dToF sensor may calculate the time of flight of light and identify the distance between the Lidar sensor 100 and the object 200 based on the calculated time of flight.

In the case of such a dToF sensor-based Lidar sensor, in order to acquire an accurate time point at which the light reflected by the object 200 is received, light output from a light emitting unit of the Lidar sensor needs to be modulated at high speed, and needs to include a single-photon avalanche diode (SPAD) device for high-speed measurement. As a result, in the case of the Lidar sensor based on the dToF sensor, the manufacturing cost is expensive.

In addition, in the case of the dToF sensor, a plano-convex lens needs to be included in order to receive light reflected by the object 200. In particular, for long-distance measurement, a size of the plano-convex lens of the dToF sensor needs to be larger, which also leads to an increase in the manufacturing cost of the Lidar sensor.

In addition, due to the increase in the size of the plano-convex lens, it may be difficult to mount the dToF sensor-based Lidar sensor on small electronic devices.

On the other hand, the iToF sensor does not need to include a single-photon avalanche diode (SPAD) device and the plano-convex lens for high-speed measurement, and therefore, may be more easily mounted on small electronic devices than the dToF sensor and is more advantageous in terms of the manufacturing cost of the Lidar sensor. Hereinafter, the iToF sensor-based Lidar sensor 100 according to the embodiment of the disclosure to solve the problems of the above-described dToF sensor-based Lidar sensor will be described.

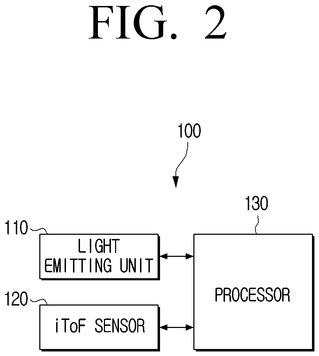

FIG. 2 is a schematic block diagram of a Lidar sensor according to an embodiment of the disclosure.

According to an embodiment of the disclosure, the Lidar sensor 100 includes a light emitting unit 110, an iToF sensor 120, and a processor 130. On the other hand, the Lidar sensor 100 does not necessarily have to include all of the above components, and some components may be omitted or added.

The light emitting unit 110 outputs modulated light toward the object 200 around the Lidar sensor 100. In this case, the modulated light (hereinafter referred to as output light) output from the light emitting unit 110 may have a waveform of a square wave or sinusoidal wave. For example, the light emitting unit 110 may output a square wave of a preset frequency at each preset cycle. Meanwhile, the disclosure is not limited thereto, and the light emitting unit 110 may have various types of waveforms.

Meanwhile, the light emitting unit 110 may include various types of laser devices. For example, the light emitting unit 110 may include a vertical cavity surface emitting laser (VCSEL) or a laser diode. In this case, the light emitting unit 110 may include a plurality of laser devices. The plurality of laser devices may be arranged in an array form.

According to an embodiment of the disclosure, the light emitting unit 110 may output light of various frequency bands. Specifically, the light emitting unit 110 may sequentially output light of different frequency bands. For example, the light emitting unit 110 may output light of 5 MHz and output light of 100 MHz in order. Alternatively, the light emitting unit 110 may output light of different frequency bands according to a driving mode of the Lidar sensor.

The iToF sensor 120 acquires light (hereinafter referred to as reflected light) reflected by the object 200. Specifically, the iToF sensor 120 receives reflected light that is output from the light emitting unit 110, reflected by the object 200, and then returns toward the Lidar sensor 100. In addition, the iToF sensor 120 may identify a phase difference between the received reflected light and the light output from the light emitting unit 110, and then identify a depth value for the object 200 based on the phase difference. Here, the depth value may be a distance value between the Lidar sensor 100 and the object 200 identified by the iToF sensor 120.

To this end, the iToF sensor 120 may be connected to the light emitting unit 110 to acquire phase information of the light output from the light emitting unit 110 or may acquire the phase information from the processor 130 connected to the light emitting unit 110. Based on the acquired phase information, the iToF sensor 120 may identify the phase difference between the light output from the light emitting unit 110 and the received reflected light.

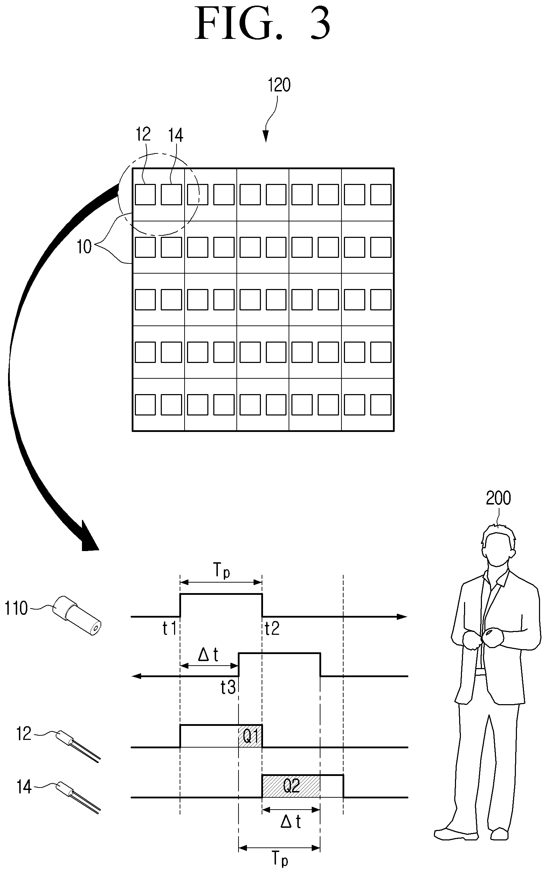

FIG. 3 is a diagram for describing a plurality of pixels included in an iToF sensor according to an embodiment of the disclosure.

Meanwhile, according to an embodiment of the disclosure, the iToF sensor 120 may be implemented as a CCD image sensor or a CMOS image sensor. In this case, the iToF sensor 120 may include a plurality of pixels 10. Here, each of the plurality of pixels 10 may be a sensing device for receiving light reflected by the object 200.

The plurality of pixels 10 may be arranged in various forms to configure the iToF sensor 120. For example, the plurality of pixels 10 may be arranged in an $N \times M$ matrix (where N and M are natural numbers greater than or equal to 1) to implement a pixel array. In FIG. 3, the plurality of pixels 10 included in the iToF sensor 120 are illustrated as being arranged in a $5 \times 5$ matrix form. However, this is for convenience of description of the disclosure, and the plurality of pixels 10 may include various numbers of pixels, and the plurality of pixels 10 may be arranged in various forms.

One or more processors (hereinafter referred to as the processor 130) may control the overall operation of the Lidar sensor 100. Specifically, the processor 130 is connected to the light emitting unit 110 and the iToF sensor 120 to control the overall operation of the Lidar sensor 100. The processor 130 may include one or a plurality of processors 130. Specifically, the processor 130 may perform an operation of the Lidar sensor 100 according to various embodiments of the disclosure by executing at least one instruction stored in a memory (not illustrated).

According to an embodiment of the disclosure, the processor 130 may be implemented by a digital signal processor (DSP), a microprocessor, a graphics processing unit (GPU), an artificial intelligence (AI) processor, a neural processing unit (NPU), or a time controller (TCON) that processes a digital image signal. However, the processor 130 is not limited thereto, but may include one or more of a central processing unit (CPU), a micro controller unit (MCU), a micro processing unit (MPU), a controller, an application processor (AP), a communication processor (CP), and an ARM processor 130, or may be defined by these terms. In addition, the processor 130 may be implemented by a system-on-chip (SoC) or a large scale integration (LSI) in which a processing algorithm is embedded, or may be implemented in the form of an application specific integrated circuit (ASIC) and a field programmable gate array (FPGA).

Meanwhile, the Lidar sensor 100 may further include a driving unit. Specifically, the drive unit is configured to rotate the Lidar sensor 100, and output light to the object 200 around the Lidar sensor 100 by rotating the Lidar sensor 100 by 360° in a preset direction, and receive the light reflected by the object 200. To this end, the driving unit may include a motor.

In addition, the Lidar sensor 100 may further include a collection unit for collecting the reflected light received by the iToF sensor 120. In this case, the collection unit may include a lens, a mirror, or the like.

According to an embodiment of the disclosure, the processor 130 may acquire a distance value corresponding to the distance between the Lidar sensor 100 and the object 200 based on pixel values acquired from each of the plurality of pixels 10 included in the iToF sensor 120. Also, the processor 130 may identify the distance between the Lidar sensor 100 and the object 200 based on the acquired distance value.

More specifically, referring to FIG. 3, the pixel 10 included in the iToF sensor 120 may include a plurality of receptors that receive the light reflected by the object 200. A plurality of receptors may be activated at preset time intervals and receive the reflected light at the preset time intervals. Meanwhile, in FIG. 3, each pixel of the plurality of pixels is illustrated as including two receptors, but the number of receptors included in a pixel may variously change according to embodiments.

Hereinafter, a receptor, which first receives the reflected light, among a plurality of receptors included in each pixel of the plurality of pixels is referred to as a first receptor 12. Also, the receptor that receives the reflected light after the preset time from the time at which the first receptor 12 starts receiving the reflected light is referred to as a second receptor 14. In FIG. 3, the receptor disposed on the left side among the plurality of receptors included in each pixel of the plurality of pixels is illustrated as the first receptor 12 and the receptor disposed on the right side among the plurality of receptors is illustrated as the second receptor 14.

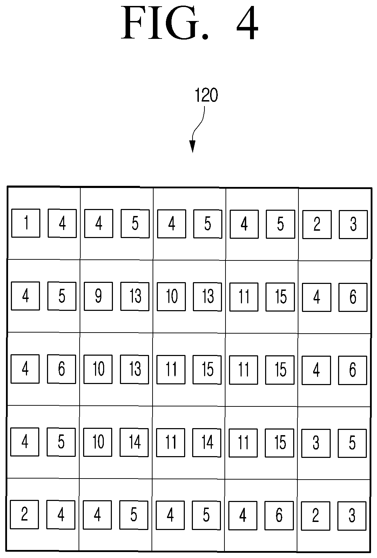

FIG. 4 is a diagram illustrating a plurality of pixel values acquired from each of a plurality of pixels according to an embodiment of the disclosure.

Meanwhile, each receptor of the plurality of receptors may acquire a pixel value corresponding to the intensity of the received reflected light. To this end, the receptor may include a photodiode (PD) and an avalanche photodiode (APD). More specifically, as the receptor receives the reflected light, the amount of charge accumulated in the diode corresponding to the intensity of the reflected light may be acquired as a pixel value. However, the present disclosure is not limited thereto, and the receptor may acquire a current value flowing through the diode as the pixel value as the receptor receives the reflected light. However, in the following description, it is assumed that the pixel value is the amount of charge for convenience of description of the disclosure.

Meanwhile, as described above, since each pixel of the plurality of pixels includes a plurality of receptors (e.g., the first receptor 12 and the second receptor 14), and the plurality of receptors are activated at the preset time intervals, the processor 130 may acquire a plurality of pixel values for each pixel of the plurality of pixels. That is, the plurality of pixel values acquired from each pixel of the plurality of pixels may include a pixel value acquired by the first receptor 12 and a pixel value acquired by the second receptor 14.

Referring to FIG. 4, the plurality of pixel values may be acquired from each of the plurality of pixels 10 (e.g., the first receptor 12 and the second receptor 14). Specifically, pixels arranged in the first row and the first column acquire 1 and 4 as a plurality of pixel values. That is, the pixels arranged in the first row and the first column have 1 as a pixel value acquired by the first receptor 12 and have 4 as a pixel value acquired by the second receptor 14 of the plurality of receptors. As such, each pixel of the plurality of pixels may acquire a plurality of pixel values by the plurality of receptors (e.g., the first receptor 12 and the second receptor 14) activated at different times.

The processor 130 may identify the phase difference between the light output from the light emitting unit 110 and the light received by the iToF sensor 120 based on a difference between pixel values acquired (or acquired by different receptors) at different times. The processor 130 may acquire the distance value corresponding to the distance between the Lidar sensor 100 and the object 200 based on the identified phase difference between the output light and the received light.

Meanwhile, the processor 130 may acquire a depth image for the object 200 based on the pixel values acquired through the plurality of pixels 10. More specifically, when the first receptor 12 included in each pixel is activated at time t1 and the second receptor 14 is activated at time t2, the processor 130 may acquire a first depth image based on the pixel value acquired through the first receptor 12 activated at time 11. Also, the processor 130 may acquire a second depth image based on the pixel value acquired through the second receptor 14 activated at time t2.

The processor 130 may identify a difference between pixel values of the same pixel 10 based on the first depth image and the second depth image, and identify the phase difference between the output light and the reflected light based on the first depth image and the second depth image. To this end, the Lidar sensor 100 may further include an RGB diode and a driver IC corresponding to each pixel of the plurality of pixels. That is, an RGB diode may receive a driving current corresponding to the pixel values of each pixel of the plurality of pixels through a driver IC and output light having luminance and colors corresponding to each pixel value.

Meanwhile, according to an embodiment of the disclosure, the processor 130 may select only pixels having a high reliability level for pixel values from among the plurality of pixels 10, and use only a plurality of pixel values of the selected pixels to identify the distance between the Lidar sensor 100 and the object 200. Here, the reliability level is a value indicating the reliability of the plurality of pixel values acquired from each pixel of the plurality of pixels. The reliability level may be acquired based on a plurality of pixel values corresponding to each pixel of the plurality of pixels. For example, the reliability level may be acquired for each pixel of the plurality of pixels based on the size of the plurality of pixel values corresponding to each pixel of the plurality of pixels.

Also, according to an embodiment of the disclosure, the processor 130 may identify the distance between the Lidar sensor 100 and the object 200 using light of different frequencies. Hereinafter, an embodiment of the disclosure related to an operation of identifying the distance will be described in detail.

First, according to an embodiment of the disclosure, the processor 130 outputs light of a first frequency and light of a second frequency greater than the first frequency through the light emitting unit 110 while the Lidar sensor 100 rotates by 360°.

Specifically, the processor 130 may control the driving unit of the Lidar sensor 100 to rotate the Lidar sensor 100 by 360°. For example, the Lidar sensor 100 may include a frame in which the light emitting unit 110 and the iToF sensor 120 are disposed, and a motor connected to the frame to rotate the frame. In this case, the processor 130 may transmit an electrical signal for driving the motor to the driving unit, so the driving unit may rotate the motor by 360° at a preset speed. In addition, the frame connected to the motor may also rotate 360° at a preset speed.

The processor 130 may output the light of the first frequency and the light of the second frequency greater than the first frequency through the light emitting unit 110 while the Lidar sensor 100 rotates 360°. Specifically, the processor 130 may control the light emitting unit 110 to generate light of different frequencies, and then, may output the light of different frequencies toward the object 200 through the light emitting unit 110. Alternatively, the Lidar sensor 100 may include a plurality of light emitting units configured to output light of different frequencies. In this case, the processor 130 may output the light of the first frequency and the light of the second frequency, respectively, through the light emitting unit configured to output the light of the first frequency and the light emitting unit configured to output the light of the second frequency.

Meanwhile, the processor 130 may sequentially output the light of the first frequency and the light of the second frequency. For example, the processor 130 may control the light emitting unit 110 to output the light of the first frequency and then output the light of the second frequency at preset time intervals. Alternatively, the processor 130 may control the light emitting unit 110 to output the light of the first frequency and then rotate the Lidar sensor 100 by a preset angle to output the light of the second frequency. However, the disclosure is not limited thereto, and the processor 130 may output the light of the second frequency greater than the first frequency through the light emitting unit 110 and then output the light of the first frequency.

The light of different frequencies may be referred to as an output light (or reflected light) set, pair light, or the like in that it is used to identify a distance between a specific point on the object 200 and the Lidar sensor 100. For example, it is assumed that the light emitting unit 110 is set to output the light of the first frequency and the light of the second frequency every 0.005 seconds. In this case, when the driving of the Lidar sensor 100 starts, the processor 130 may output the light of the first frequency, and then output the light of the second frequency after 0.005 seconds have elapsed. Also, the processor 130 may output the light of the first frequency and then output the light of the second frequency after 0.005 seconds have elapsed. That is, the processor 130 may output light of another first frequency after 0.010 seconds after the driving of the Lidar sensor starts. The processor 130 may output the light of the first frequency and then output light of another second frequency after 0.005 seconds have elapsed. That is, the processor 130 may output light of another second frequency after 0.015 seconds after the driving of the Lidar sensor 100 starts. In this case, the processor 130 may use the light of the first frequency output at the time when the driving of the Lidar sensor starts and the light of the second frequency output at 0.005 seconds after the driving of the Lidar sensor 100 starts to identify a distance between the specific point on the object 200 and the Lidar sensor 100. The processor 130 may use the light of the first frequency output after the driving of the Lidar sensor 100 starts and the light of the second frequency output at 0.015 seconds after the driving of the Lidar sensor 100 starts to identify a distance between another specific point on the object 200 and the Lidar sensor 100. As such, the processor 130 may identify the distance between the Lidar sensor 100 and the object 200 based on the light of the first frequency and the light of the second frequency output each preset time interval (or preset time cycle).

Meanwhile, the light of the second frequency may be set to a greater value than the light of the first frequency. The processor 130 may use the light of the first frequency having a relatively small value to identify a distance to the Lidar sensor 100 to a distant object 200. That is, when the processor 130 uses the light of the first frequency than when using the light of the second frequency, the sensing distance of the Lidar sensor may be greater. Here, the sensing distance may be an identifiable distance between the Lidar sensor 100 and the object 200. Also, the processor 130 may use the light of the second frequency having a relatively large value to more accurately identify the distance between the Lidar sensor 100 and the object 200. That is, when the processor 130 uses the light of the second frequency than when using the light of the first frequency, the sensing distance of the Lidar sensor 100 may be more accurate.

Therefore, according to an embodiment of the disclosure, as the processor 130 may identify the distance between the Lidar sensor 100 and the object 200 using the light of the first frequency and the light of the second frequency greater than the first frequency, the processor 130 may identify the distance between the object 200 and the Lidar sensor 100, and at the same time, accurately identify the distance between the object 200 and the Lidar sensor 100. Hereinafter, for convenience of description of the disclosure, it is assumed that the first frequency is 5 MHz and the second frequency is 100 MHz greater than the first frequency.

According to an embodiment of the disclosure, the processor 130 may output the light of the first frequency and the light of the second frequency, and then, when the output light of the first frequency and the output light of the second frequency are reflected by the object 200 and received by the plurality of pixels 10, the processor 130 may acquire a plurality of first pixel values based on the reflected light of the first frequency and acquire a plurality of second pixel values based on the reflected light of the second frequency.

Specifically, the processor 130 may receive the light of 5 MHz reflected through the iToF sensor 120 when the light of 5 MHz output through the light emitting unit is reflected by the object 200 and returns toward the Lidar sensor 100. The processor 130 may receive the light of 100 MHz reflected through the iToF sensor 120 when the light of 100 MHz output through the light emitting unit is reflected by the object 200 and returns toward the Lidar sensor 100. In this case, the processor 130 may acquire a plurality of pixel values corresponding to light of each frequency of the first frequency and the second frequency. In detail, the processor 130 may acquire pixel values of the plurality of pixels 10 included in the iToF sensor 120 as the reflected light of 5 MHz is received through the iToF sensor 120. Here, the pixel value may be a charge amount value accumulated in a plurality of receptors included in each of the plurality of pixels 10 based on the intensity of the reflected light of 5 MHz. Similarly, the processor 130 may acquire pixel values of the plurality of pixels 10 included in the iToF sensor 120 as the reflected light of 100 MHz is received through the iToF sensor 120. Hereinafter, the plurality of pixel values acquired by receiving the reflected light of 5 MHz will be referred to as first pixel values, and the plurality of pixel values acquired by receiving the reflected light of 100 MHz will be referred to as second pixel values.

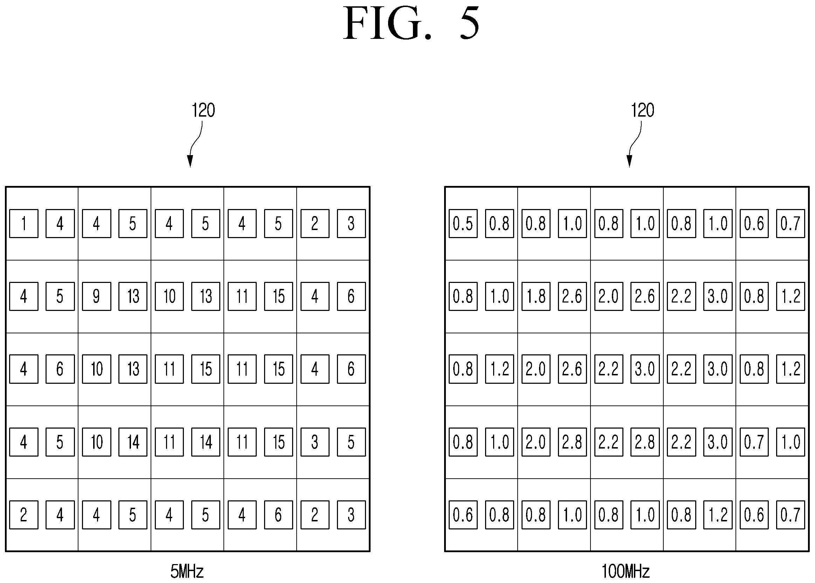

FIG. 5 is a diagram illustrating a first pixel value corresponding to light of 5 MHz and a second pixel value corresponding to light of 100 MHz according to an embodiment of the disclosure.

Referring to FIG. 5, the processor 130 may receive the reflected light of the light of 5 MHz through the iToF sensor 120 when the light of 5 MHz output through the light emitting unit is reflected by the object 200 and returns toward the Lidar sensor 100. Further, as the processor 130 receives the reflected light of the light of 5 MHz, the processor 130 may acquire the plurality of first pixel values corresponding to the light of 5 MHz based on the amount of charge accumulated in the first receptor 12 and the second receptor 14 included in each of the plurality of pixels 10. Similarly, the processor 130 may receive the reflected light of the light of 100 MHz through the iToF sensor 120 when the light of 100 MHz output through the light emitting unit is reflected by the object 200 and returns toward the Lidar sensor 100. Further, as the processor 130 receives the reflected light of the light of 100 MHz, the processor 130 may acquire the plurality of second pixel values corresponding to the light of 100 MHz based on the amount of charge accumulated in the first receptor 12 and the second receptor 14 included in each of the plurality of pixels 10.

Meanwhile, the plurality of first pixel values and the plurality of second pixel values may be different from each other. Specifically, in a specific pixel among the plurality of pixels 10 included in the iToF sensor 120, the plurality of first pixel values acquired as the specific pixel receives the reflected light of the light of 5 MHz and the plurality of second pixel values acquired as the specific pixel receives the reflected light of the light of 100 MHz may be different from each other. Referring to FIG. 5, in the case of pixels arranged in first row and first column among the plurality of pixels 10, the plurality of first pixel values corresponding to the light of 5 MHz are 1 and 4, while the plurality of second pixel values corresponding to the light of 100 MHz are 0.5 and 0.8. As the frequencies of light output from the light emitting unit are different from each other, cycles of reflected light of each light received by the iToF may be different from each other. Accordingly, since the values of the amount of charge accumulated in the receptor may be different, the plurality of pixel values corresponding to each frequency of the first frequency and the second frequency may be different from each other. In addition, since the time and time interval at which the plurality of receptors included in each pixel of the plurality of pixels are activated (or open) may be set based on the frequency output from the light emitting unit, the plurality of pixels corresponding to each frequency of the first frequency and the second frequency may be different from each other.

After acquiring the plurality of first pixel values and the plurality of second pixel values, the processor 130 may use the reliability levels of the plurality of first pixel values determined based on the size of the plurality of first pixel values to identify a plurality of third pixel values from among the plurality of first pixel values, and use the reliability levels of the plurality of second pixel values determined based on the size of the plurality of second pixel values to identify a plurality of fourth pixel values from among the plurality of second pixel values.

Specifically, even if a single light is output from the light emitting unit 110, the iToF sensor 120 may receive a plurality of reflected lights by diffraction, scattering, reflection, and the like of the output light. This may be caused by the surrounding environment of the Lidar sensor or the shape or color of an object. Therefore, the plurality of pixel values of each of the plurality of pixels 10 for the same light output from the light emitting unit 110 may be different from each other.

That is, referring back to FIG. 5, the plurality of first pixel values acquired from the plurality of pixels 10 corresponding to 5 MHz may be different for each of the plurality of pixels 10.

Therefore, according to an embodiment of the disclosure, the processor 130 may select only pixels having a pixel value having a high reliability level based on the reliability levels of the plurality of pixel values, and identify the distance between the Lidar sensor 100 and the object 200 based on the plurality of pixel values of the selected pixels. The processor 130 may select at least one pixel from among the plurality of pixels 10 based on the reliability levels, and identify the distance between the Lidar sensor 100 and the object 200 based on the plurality of pixel values of the selected at least one pixel.

To this end, the processor 130 may identify the reliability level of each pixel of the plurality of pixels based on the plurality of pixel values for each pixel. Specifically, the processor 130 may identify the reliability levels (hereinafter, first reliability levels) of the plurality of pixels 10 for the light of the first frequency based on the plurality of first pixel values. In addition, the processor 130 may identify the reliability levels (hereinafter, second reliability levels) of the plurality of pixels 10 for the light of the second frequency based on the plurality of second pixel values.

In this case, according to an embodiment of the disclosure, the processor 130 may identify each of the reliability levels of the plurality of first pixel values and the reliability levels of the plurality of second pixel values, respectively, based on the following equations.

$$\text{Reliability level of first pixel value} = \sqrt{(first\ value)^2 + (second\ value)^2}$$

$$\text{Reliability level of second pixel value} = \sqrt{(third\ value)^2 + (fourth\ value)^2}$$

In this case, the first value may be a first pixel value acquired as the first receptor 12 of the plurality of receptors included in each pixel of the plurality of pixels receives the reflected light of the first frequency, and the second value may be a first pixel value acquired as the second receptor 14 of the plurality of receptors included in each pixel of the plurality of pixels receives the reflected light of the first frequency. In this case, the third value may be a second pixel value acquired as the first receptor 12 of the plurality of receptors included in each pixel of the plurality of pixels receives the reflected light of the second frequency, and the fourth value may be a second pixel value acquired as the second receptor 14 of the plurality of receptors included in each pixel of the plurality of pixels receives the reflected light of the second frequency.

For example, referring to FIG. 5, the processor 130 may identify, as $\sqrt{17}(\sqrt{1^2 - 4^2})$, the first reliability level for the light of the first frequency (i.e., light of 5 MHz) of pixels arranged in the first row and the first column among the plurality of pixels 10. The processor 130 may identify, as $\sqrt{0.89}(\sqrt{0.5^2 - 0.8^2})$, the second reliability level for the light of the second frequency (i.e., light of 100 MHz) of pixels arranged in the first row and the first column among the plurality of pixels 10. As such, the processor 130 may identify the first reliability levels for the plurality of first pixel values based on the light of the first frequency and the second reliability levels for the plurality of second pixel values based on the light of the second frequency, respectively.

Meanwhile, a method of identifying a first reliability level and a second reliability level is not limited to the above-described embodiment, and various methods may be applied.

For example, the processor 130 may identify the first reliability level of the plurality of pixels 10 based on the first pixel value (i.e., first value) acquired by the first receptor 12 of the plurality of receptors included in the plurality of pixels 10 acquired from each pixel of the plurality of pixels. Referring back to FIG. 5, the processor 130 may identify the first reliability level of the pixels arranged in the first row and the first column among the plurality of pixels 10 as 1 which is the first pixel 20 value (i.e., first value) acquired by the first receptor 12. Similarly, the processor 130 may identify the second reliability levels of the plurality of pixels 10 for the light of the second frequency based on the plurality of second pixel values. Describing again based on the above example, specifically, the processor 130 may identify the second reliability level of the plurality of pixels 10 based on the second pixel value (i.e., third value) acquired by the first receptor 12 of the plurality of receptors included in the plurality of pixels 10 acquired from each pixel of the plurality of pixels. Referring back to FIG. 5, the processor 130 may identify the first reliability level of the pixels arranged in the first row and first column among the plurality of pixels 10 as 0.5 which is the second pixel 30 value (i.e., third value) acquired by the first receptor 12.

As another example, the processor 130 may identify the first reliability level and the second reliability level of the plurality of pixels 10 based on the first pixel value (i.e., second value) and the second pixel value (i.e., fourth value) acquired by the second receptor 14 of the plurality of receptors included in the plurality of pixels 10 acquired from each pixel.

Alternatively, the processor 130 may identify the reliability level of each pixel of the plurality of pixels as the sum of pixel values acquired for light (light of the first frequency and light of the second frequency) of each frequency of the first frequency and the second frequency by the plurality of receptors included in each pixel of the plurality of pixels. That is, referring back to FIG. 5, the processor 130 may identify the first reliability level of the pixels arranged in the first row and the first column from among the plurality of pixels 10 as 5 which is the sum of 1 which is the first pixel 20 value (i.e., first value) acquired by the first receptor 12 and 4 which is the first pixel 20 value (i.e., second value) acquired by the second receptor 14. In addition, the processor 130 may identify the second reliability level of the pixels arranged in the first row and the first column from among the plurality of pixels 10 as 1.3 which is the sum of 0.5 which is the second pixel 30 value (i.e., third value) acquired by the first receptor 12 and 0.8 which is the second pixel 30 value (i.e., fourth value) acquired by the second receptor 14.

Meanwhile, according to an embodiment of the disclosure, the processor 130 may identify the plurality of third pixel values each having a reliability level greater than or equal to a preset value from among the plurality of first pixel values based on the reliability level of the plurality of first pixel values, and the plurality of second pixel values and identify the plurality of fourth pixel values each having a reliability level greater than or equal to a preset value from among the plurality of second pixel values based on the reliability levels of the plurality of second pixel values. In this case, each of the reliability levels of the plurality of first and second pixel values has a high reliability level as the size of the pixel value increases.

Specifically, the processor 130 may select the plurality of pixels 10 having the plurality of first reliability levels greater than or equal to the preset reliability level (hereinafter, a preset first value). In this case, the plurality of pixels 10 selected from among the plurality of pixels 10 based on the first reliability level are referred to as the first pixel 20. Also, the processor 130 may identify the plurality of third pixel values based on the plurality of first pixel values of the selected first pixel 20. The third pixel value refers to the first pixel value of each of the plurality of first pixels 20 selected according to the first reliability level. Similarly, the processor 130 may select the pixels having the second reliability level greater than or equal to the preset reliability level (hereinafter, a preset second value). In this case, the plurality of pixels 10 selected from among the plurality of pixels 10 based on the second reliability level are referred to as the second pixel 30. The processor 130 may identify the plurality of fourth pixel values based on the plurality of second pixel values of the selected second pixel 30. The fourth pixel value refers to the second pixel value of each of the plurality of second pixels 30 selected according to the second reliability level.

Meanwhile, the preset first value and the preset second value, which are criteria for selecting the third pixel value and the fourth pixel value, may be set based on the magnitude of each frequency of the first frequency and the second frequency, or the like. Accordingly, the number of selected third pixel values and the number of selected fourth pixel values may be different.

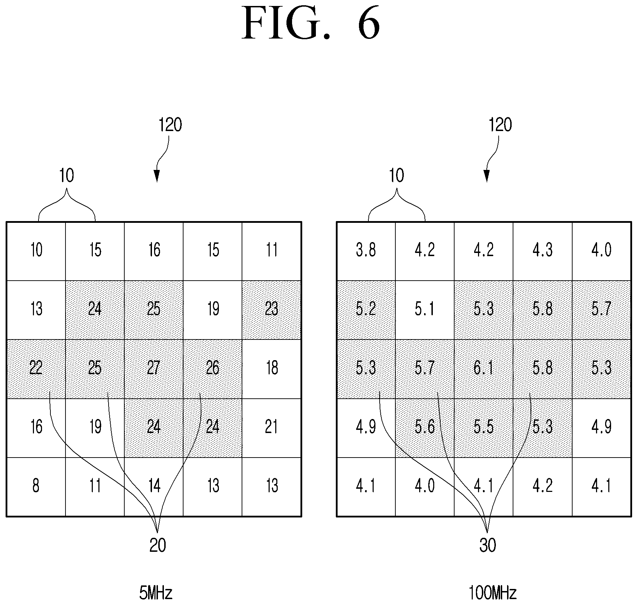

FIG. 6 is a diagram illustrating a selection of the plurality of third pixel values based on the first reliability levels and the plurality of fourth pixel values based on the second reliability levels according to an embodiment of the disclosure.

Referring to FIG. 6, when the preset first value, which is the criterion for identifying the third pixel value, is set to 22, the processor 130 may select nine pixels as pixels having the first reliability level of 22 or greater from among the plurality of pixels 10. That is, the processor 130 may identify nine first pixels 20 based on the first reliability level. Also, the processor 130 may identify the plurality of first pixel values acquired by the nine pixels as the plurality of third pixel values. Meanwhile, when the preset second value, which is the criterion for identifying the fourth pixel value, is set to 5.2, the processor 130 may select twelve pixels as pixels having the second reliability level of 5.2 or greater from among the plurality of pixels 10. That is, the processor 130 may identify the twelve second pixels 30 based on the second reliability level. Also, the processor 130 may identify the plurality of second pixel values acquired by the twelve pixels as the plurality of fourth pixel values.

Meanwhile, according to an embodiment of the disclosure, the processor 130 may perform a filtering process of applying a filter having a preset size to the plurality of pixels 10, prior to selecting the first pixel 20 and the second pixel 30 from among the plurality of pixels 10 based on the first reliability level and the second reliability level. An embodiment of the disclosure related to the filtering process will be described.

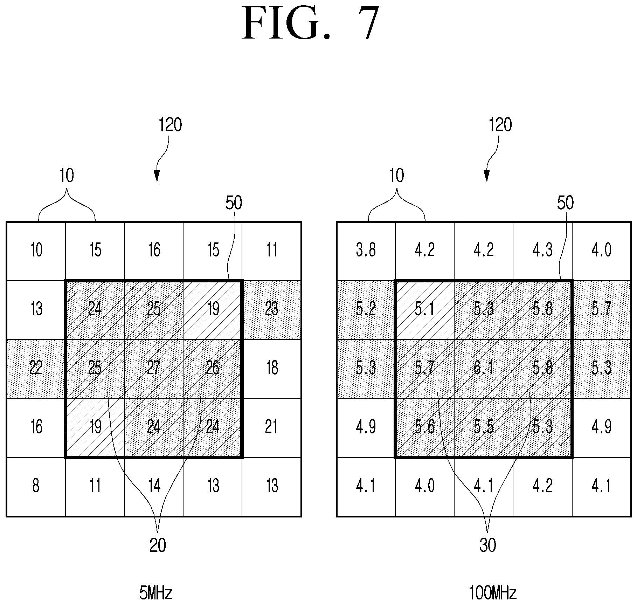

FIG. 7 is a diagram for describing filtering of a plurality of pixels by applying a filter having a preset size to the plurality of pixels according to an embodiment of the disclosure.

According to an embodiment of the disclosure, the processor 130 may acquire a plurality of filtered pixels by applying the filter 50 having a preset size to the plurality of pixels 10, and identify the plurality of third pixel values and the plurality of fourth pixel values based on the filtered pixel values of the plurality of pixels 10.

Specifically, the processor 130 may perform primary filtering on the plurality of pixels 10 prior to selecting the first pixel 20. It may mean that, as the number of pixels included in the iToF increases, there are many objects for which the processor 130 needs to identify the first reliability level and compare the first reliability level with the preset first value. That is, the problem of the time and resources required for the processor 130 to select the first pixel 20 from among the plurality of pixels 10 is caused. Therefore, the processor 130 may apply the filter 50 having the preset size prior to selecting the first pixel 20 from among the plurality of pixels 10 based on the first reliability level to first select the plurality of pixels included in the filter 50 having the preset size from among the plurality of pixels 10. Here, among the plurality of pixels 10, the plurality of pixels selected by the filter 50 having the preset size are referred to as the third pixel.

For example, referring to FIG. 7, the processor 130 may apply a $3 \times 3$ filter 50 to the plurality of pixels 10 arranged in a $5 \times 5$ matrix to first select nine third pixels arranged in the center. Also, the processor 130 may select the first pixel 20 from among the nine third pixels by comparing the first reliability levels of the selected nine third pixels. In this case, when it is assumed that the preset first reliability level used to select the first pixel 20 is 22, the processor 130 may select, as the first pixel 20, the remaining seven third pixels excluding two third pixels having a reliability level of 19 from among the nine third pixels. That is, the processor 130 may primarily select the plurality of third pixels from among the plurality of pixels 10 included in the iToF sensor 120 using the filter 50 having the preset size, and secondarily select the first pixel 20 from among the plurality of third pixels based on the first reliability levels of the plurality of selected third pixels.

Similarly, the processor 130 may apply the filter 50 having the preset size prior to selecting the second pixel 30 from among the plurality of pixels 10 based on the second reliability levels to first select the plurality of pixels 10 included in the filter 50 having the preset size from among the plurality of pixels 10. For example, referring to FIG. 7, the processor 130 may apply a $3 \times 3$ filter 50 to the plurality of pixels 10 arranged in a $5 \times 5$ matrix to first select nine third pixels arranged in the center. Also, the processor 130 may select the second pixel 30 from among the nine third pixels by comparing the second reliability levels of the selected nine third pixels. In this case, when it is assumed that the preset second reliability level used to select the second pixel 30 is 5.2, the processor 130 may select, as the second pixel 30, the remaining eight third pixels excluding one third pixels having a reliability level of 5.1 from among the nine third pixels. That is, the processor 130 may primarily select the plurality of third pixels from among the plurality of pixels 10 included in the iToF sensor 120 using the filter 50 having the preset size, and secondarily select the second pixel 30 from among the plurality of third pixels based on the second reliability levels of the plurality of selected third pixels.

Meanwhile, according to an embodiment of the disclosure described with reference to FIG. 7, the filter having the same size is applied to the plurality of pixels 10 having the plurality of first pixel values corresponding to the light of the first frequency and the plurality of pixels 10 having the plurality of second pixel values corresponding to the light of the second frequency, but is not limited thereto. That is, the processor 130 may apply a filter having a preset first size to the plurality of pixels 10 having the plurality of first pixel values corresponding to the light of the first frequency, and apply a filter having a preset second size to the plurality of pixels 10 having the plurality of second pixel values corresponding to the light of the second frequency. In this case, the size of each filter may be determined based on the size of the frequency of light.

In addition, the size and position of the filter 50 applied to the plurality of pixels 10 arranged in a matrix form may be set differently depending on the number, arrangement, and the like of the plurality of pixels 10. That is, although FIG. 7 illustrates that the filter 50 of $3 \times 3$ is applied to the center of the pixel matrix, the filters may be applied to various positions, such as the upper left and the upper right of the pixel matrix according to embodiments.

Meanwhile, according to an embodiment of the disclosure, the processor 130 may identify the distance between the Lidar sensor 100 and the object 200 based on at least one of a first distance value acquired based on the plurality of third pixel values and a second distance value acquired based on the plurality of fourth pixel values.

Specifically, the processor 130 may identify the phase difference between the output light of the first frequency and the reflected light of the first frequency in each first pixel 20 based on the first pixel value (i.e., the third pixel value) of the first pixel 20 selected based on the first reliability levels. Referring back to FIG. 3, the processor 130 activates the first receptor 12 among the plurality of receptors at a time t1 when the light of the first frequency is output from the light emitting unit 110. The processor 130 turns off the activated first receptor 12 and activates the second receptor 14 at a time t2 when a preset time interval $T_P$ after t1 has elapsed. In this case, different amounts of charge, Q1 and Q2, are accumulated in the first receptor 12 and the second receptor 14, respectively, according to the intensity of the received reflected light of the first frequency.

Specifically, in the case of pixels arranged in the first row and the first column among the plurality of pixels 10 arranged in a matrix form, when the light of the first frequency output at t1 is reflected by the object 200, charges are accumulated in the first receptor 12 of the pixels arranged in the first row and the first column from the time t3 when the reflected light of the first frequency is received. When the first receptor 12 is turned off and the second receptor 14 is turned on at t2, as the reflected light of the first frequency is received, charges are also accumulated in the second receptor 14 of the pixels arranged in the first row and the first column. In this case, Q1 and Q2 may be acquired as the plurality of first pixel values in the pixels arranged in the first row and first column. In this case, a time cycle in which the first receptor 12 and the second receptor 14 are activated or turned on may be set based on the frequency or cycle of the output light.

Further, the processor 130 may identify the phase difference $\Delta t$ between the reflected light of the first frequency received from the pixels arranged in the first row and the first column and the output light of the first frequency output from the light emitting unit, based on the plurality of first pixel values Q1 and Q2. For example, the processor 130 may identify the phase difference $\Delta t$ between the reflected light of the first frequency received from the pixels arranged in the first row and the first column and the output light of the first frequency output from the light emitting unit based on the phase, frequency, cycle, or the plurality of first pixel values Q1 and Q2 of the light of the first frequency output from the light emitting unit 110. Alternatively, the processor 130 may also identify the phase difference $\Delta t$ between the reflected light of the first frequency received from the pixels arranged in the first row and the first column and the output light of the first frequency output from the light emitting unit, based on the difference between the plurality of pixel values Q1 and Q2.

Meanwhile, the processor 130 may equally apply the above method to identify the phase difference between the output light and the reflected light of the second frequency light.

Meanwhile, the processor 130 may acquire the distance values corresponding to each first pixel 20 based on the phase difference between the output light of the first frequency identified for each first pixel 20 and the reflected light of the first frequency. In this case, the distance value corresponding to the first pixel 20 may be referred to as the distance value corresponding to the light of the first frequency. Meanwhile, as an example, the distance value corresponding to the first pixel 20 may be identified by the following Equation.

$$\text{Distance value corresponding to first pixel 20} = \frac{1}{2} \times T_{P1} \times \frac{Q_2}{Q_1 + Q_2}$$

Here, c denotes a speed of light, $T_{p1}$ denotes a cycle of light of the first frequency, Q1 denotes the amount of charge accumulated in the first receptor 12 as the light of the first frequency is received, and Q2 denotes the amount of charge accumulated in the second receptor 14 as the light of the first frequency is received.

In addition, the processor 130 may acquire the distance values corresponding to each second pixel 30 based on the phase difference between the output light of the second frequency identified for each second pixel 30 and the reflected light of the second frequency. In this case, the distance value corresponding to the second pixel 30 may be referred to as the distance value corresponding to the light of the second frequency. Meanwhile, as an example, the distance value corresponding to the second pixel 30 may be identified by the following Equation.

$$\text{Distance value corresponding to second pixel 30} = \frac{1}{2} \times T_{P2} \times \frac{Q_4}{Q_3 + Q_4}$$

Here, c denotes a speed of light, $T_{p2}$ denotes a cycle of light of the second frequency, Q3 denotes the amount of charge accumulated in the first receptor 12 as the light of the second frequency is received, and Q4 denotes the amount of charge accumulated in the second receptor 14 as the light of the second frequency is received.

Meanwhile, the processor 130 may select the plurality of first pixels 20 based on the first reliability levels, and acquire the plurality of distance values based on the plurality of first pixel values (that is, the plurality of third pixel values) of each of the plurality of selected first pixels 20. That is, the processor 130 may acquire the plurality of distance values corresponding to the plurality of first pixels 20. Similarly, the processor 130 may select the plurality of second pixels 30 based on the second reliability levels, and acquire the plurality of distance values based on the plurality of second pixel values (that is, the plurality of fourth pixel values) of each of the plurality of selected second pixels 30. That is, the processor 130 may acquire the plurality of distance values corresponding to the plurality of second pixels 30.

In this case, the processor 130 may identify one distance value (i.e., the first distance value) corresponding to the first frequency based on the plurality of distance values corresponding to the plurality of first pixels 20. In addition, the processor 130 may identify one distance value (i.e., second distance value) corresponding to the second frequency based on the plurality of distance values corresponding to the plurality of second pixels 30. Hereinafter, an embodiment of the disclosure related to an operation of identifying the distances will be described.

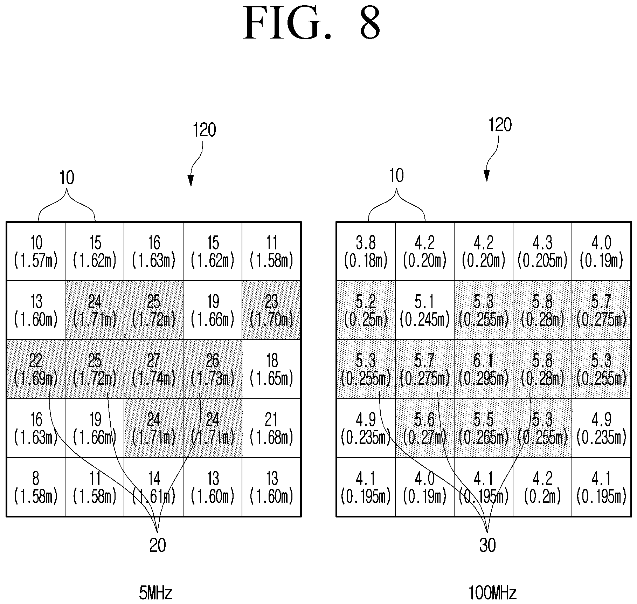

FIG. 8 is a diagram for identifying the first distance value and the second distance value among the plurality of distance values corresponding to the plurality of first pixels and the plurality of distance values corresponding to the plurality of second pixels, according to an embodiment of the disclosure.

According to an embodiment of the disclosure, the processor 130 may identify the plurality of distance values based on the plurality of third pixel values and identify the first distance value based on an average value of the plurality of identified distance values. The processor 130 may identify the plurality of distance values based on the plurality of fourth pixel values and identify the second distance value based on an average value of the plurality of identified distance values.

Specifically, the processor 130 may acquire the plurality of distance values corresponding to the plurality of first pixels 20 based on the plurality of first pixel values (i.e., third pixel value) corresponding to each of the plurality of first pixels 20 selected based on the first reliability levels. In this case, the processor 130 may calculate an average value of a plurality of distance values corresponding to the first pixel 20 and identify the calculated average value as the first distance value corresponding to the first frequency. In addition, the processor 130 may acquire the plurality of distance values corresponding to the plurality of second pixels 30 based on the plurality of second pixel values (i.e., fourth pixel value) corresponding to each of the plurality of second pixels 30 selected based on the second reliability levels. In this case, the processor 130 may calculate an average value of a plurality of distance values corresponding to the second pixel 30 and identify the calculated average value as the second distance value corresponding to the second frequency.

Referring to FIG. 8, the processor 130 may acquire the average value of the plurality of values corresponding to the plurality of first pixels 20 based on the plurality of third pixel values of the first pixels 20 corresponding to a first frequency of 5 MHz. The processor 130 may identify the acquired average value as the first value. That is, the processor 130 may identify the first distance value corresponding to the first frequency as 1.716 m ((1.71 + 1.72 + 1.69 + 1.72 + 1.72+ 1.74 + 1.73 + 1.71 + 1.71)/8). In addition, the processor 130 may acquire the average value of the plurality of acquired distance values corresponding to the plurality of second pixels 30 based on the plurality of fourth pixel values of the second pixels 30 corresponding to the second frequency of 100 MHz. The processor 130 may identify the acquired average value as the second value. That is, the processor 130 may identify the second distance value corresponding to the second frequency as 0.288 m ((0.25 + 0.255 + 0.280 + 0.275 + 0.255 + 0.275 + +0.295 + 0.280 + 0.255 + 0.270 + 0.265 + 0.255)/12).

According to an embodiment of the disclosure, the processor 130 may identify the largest distance value among the plurality of distance values identified based on the plurality of third pixel values as the first distance value. The processor 130 may identify the largest distance value among the plurality of distance values identified based on the plurality of fourth pixel values as the second distance value.

Specifically, the processor 130 may acquire the plurality of distance values corresponding to the plurality of first pixels 20 based on the plurality of first pixel values (i.e., third pixel value) corresponding to each of the plurality of first pixels 20 selected based on the first reliability levels. In this case, the processor 130 may identify the largest distance value among the plurality of distance values as the first distance value corresponding to the first frequency. In addition, the processor 130 may acquire the plurality of distance values corresponding to the plurality of second pixels 30 based on the plurality of second pixel values (i.e., fourth pixel value) corresponding to each of the plurality of second pixels 30 selected based on the second reliability levels. In this case, the processor 130 may identify the largest distance value among the plurality of distance values as the second distance value corresponding to the second frequency.

Referring to FIG. 8, the processor 130 may acquire the plurality of distance values corresponding to the plurality of first pixels 20 based on the plurality of third pixel values of the first pixels 20 corresponding to a first frequency of 5 MHz. In this case, the processor 130 may identify a distance value corresponding to the first reliability level, which is the largest among the plurality of distance values. That is, the processor 130 may select the first pixel 20 having the largest first reliability level among the plurality of first pixels 20. In FIG. 8, the processor 130 may select the first pixel 20 having the first reliability level of 27 among nine first pixels 20. Also, the processor 130 may identify 1.74m, which is a distance value corresponding to the selected first pixel 20, as the first distance value.

In addition, referring to FIG. 8, the processor 130 may acquire the plurality of distance values corresponding to the plurality of second pixels 30 based on the plurality of fourth pixel values of the second pixels 30 corresponding to the second frequency of 100 MHz. In this case, the processor 130 may identify a distance value corresponding to the second reliability level, which is the largest among the plurality of distance values. That is, the processor 130 may select the second pixel 30 having the largest second reliability level among the plurality of second pixels 30. In FIG. 8, the processor 130 may select the second pixel 30 having the second reliability level of 6.1 among twelve second pixels 30. Also, the processor 130 may identify 0.295 m, which is a distance value corresponding to the selected second pixel 30, as the second distance value.

On the other hand, although not illustrated in the drawings, when the plurality of first pixels 20 having the largest first reliability level are selected, the processor 130 may identify the first distance value based on the average value of the distance values of the plurality of selected first pixels 20. In addition, when the plurality of second pixels 30 having the largest first reliability level are selected, the processor 130 may identify the second distance value based on the average value of the distance values of the plurality of selected second pixels 30.

In addition, according to an embodiment of the disclosure, unlike the case illustrated in FIG. 8, the processor 130 may acquire the distance value only for the first pixel 20 selected based on the first reliability levels. Similarly, the processor 130 may acquire the distance value only for the second pixel 30 selected based on the second reliability levels.

Meanwhile, according to the above-described embodiment of the disclosure, it has been described that the same method is applied to the method of acquiring a first distance value and a second distance value, but the method of acquiring a first distance value and a second distance value may be different. For example, the first distance value may be acquired based on the average value of the plurality of distance values corresponding to the first pixel 20, and the second distance value may be acquired based on the distance value of the pixel having the largest second reliability level among the plurality of distance values corresponding to the second pixel 30.

In addition, the processor 130 may acquire the first distance value and the second distance value based on various methods. For example, the processor 130 may acquire the first distance value and the second distance value based on a weighted average value. Specifically, the processor 130 may select, as the first pixels 20, pixels having the first reliability level greater than or equal to a preset first value and less than a preset third value among the plurality of pixels 10, and may select, as a third pixel, pixels having the first reliability level greater than or equal to the preset third value among the plurality of pixels 10. In this case, the processor 130 may calculate an average value (hereinafter, first average value) by applying a first weight to a distance value corresponding to the first pixel 20, with respect to the first pixel 20, and calculate an average value (hereinafter, second average value) by applying a second weight greater than the first weight to a distance value corresponding to the third pixel, with respect to the third pixel. Also, the processor 130 may acquire the first distance value as the average value of the first average value and the second average value. In addition, the processor 130 may select, as the second pixels 30, pixels having the second reliability level greater than or equal to the preset first value and less than a preset fourth value among the plurality of pixels 10, and may select, as a fourth pixel, pixels having the second reliability level greater than or equal to the preset fourth value among the plurality of pixels 10. In this case, the processor 130 may calculate an average value (hereinafter, third average value) by applying a third weight to a distance value corresponding to the second pixel 30, with respect to the second pixel 30, and calculate an average value (hereinafter, fourth average value) by applying a fourth weight greater than the third weight to a distance value corresponding to the fourth pixel, with respect to the fourth pixel. Also, the processor 130 may acquire the second distance value as the average value of the third average value and the fourth average value.

Meanwhile, the processor 130 may identify the distance between the Lidar sensor 100 and the object 200 based on the acquired first distance value and second distance value.

In this regard, according to an embodiments of the disclosure, the processor 130 may determine a compensation value based on the first distance value and the second frequency when the difference between the first distance value and the second distance value is greater than or equal to the preset value, compensate for the second distance value based on the determined compensation value, and identify the compensated second distance value as the distance between the Lidar sensor 100 and the object 200. In this case, the preset value may be set based on the second frequency.

As described above, the second distance value may be acquired based on the light of the second frequency relatively greater than the first frequency. In this case, when the light of the second frequency is relatively greater than the light of the first frequency, there may be a maximum distance value (or limit distance value) of the distance that may be identified between the Lidar sensor 100 and the object 200 due to the cyclicity of the light of the second frequency. For example, when the second frequency is 100 MHz, the processor 130 may identify the distance between the Lidar sensor 100 and the object 200 as a maximum of 1.5 m based on the light of the second frequency. As described above, this is due to the cycle of the second frequency of 100 MHz (1.5 m = c/2f = $(3 \times 10^8)/(2 \times 100 \times 10^6)$, where c denotes the speed of light and f denotes the magnitude of the second frequency). As a result, the processor 130 may identify a distance of an object located at 1.7 m from the Lidar sensor 100 as 0.2 m when using the light of the second frequency. In addition, the processor 130 may identify a distance of an object located at 3.7 m from the Lidar sensor 100 as 0.7 m when using the light of the second frequency. Accordingly, the processor 130 may determine the compensation value for the second distance value based on the first distance value acquired by using the light of the first frequency.

Specifically, the processor 130 may compare the first distance value and the second distance value and identify whether the difference between the first distance value and the second distance value is greater than or equal to the preset value. Also, when it is determined that the difference between the first distance value and the second distance value is greater than or equal to the preset value, the processor 130 may determine the compensation value to be applied to the second distance value based on the first distance value and the second frequency.

In this case, the processor 130 may determine a proportional constant for calculating the compensation value based on the first distance value compared to the maximum distance value that may be identified based on the light of the second frequency. The processor 130 may determine the compensation value based on the maximum distance value that may be identified based on the determined proportional constant and the light of the second frequency. For example, when the maximum distance value that may be identified based on the light of the second frequency is 1.5 m and the first distance value is 4.8 m, the processor 130 may acquire 3.2 as the first distance value compared to the maximum distance value that may be identified based on light of the second frequency. The processor 130 may identify integer 3 excluding a decimal point in the acquired 3.2 as a proportional constant. The processor 130 may determine a compensation value obtained by multiplying 1.5 m, which is the maximum distance value that may be identified based on the light of the second frequency, by 3, which is the identified proportional constant. That is, the processor 130 may determine 4.5 as the compensation value.

The processor 130 may compensate for the second distance value based on the determined compensation value, and identify the compensated second distance value as the distance between the Lidar sensor 100 and the object 200. For example, it is assumed that the first frequency is 5 MHz, the first distance value corresponding to the first frequency is 1.716 m, the second frequency is 100 MHz, the second distance value corresponding to the second frequency is 0.288 m, and the preset value is 1.4 m. In this case, the processor 130 may identify that the difference between the first distance value and the second distance value is 1.428 m. Accordingly, the processor 130 may identify that the difference between the first distance value and the second distance value is greater than or equal to 1.4 m corresponding to the preset value. Accordingly, the processor 130 may determine the compensation value for the second distance value based on the first distance value. According to the method of determining a compensation value described above, the processor 130 may determine the compensation value of the second distance value as 1.5 m (round down (1.716m/1.5 m) × 1.5 m). The processor may identify the distance between the Lidar sensor 100 and the object 200 by applying the determined compensation value to the second distance value. That is, the processor 130 may identify 1.788m, which is the second distance value (0.288m + 1.5 m) to which the compensation value is applied, as the distance between the Lidar sensor 100 and the object 200.

Meanwhile, according to an embodiment of the disclosure, when the difference between the first distance value and the second distance value is less than the preset value, the processor 130 may identify the second distance value as the distance between the Lidar sensor 100 and the object 200.

The processor 130 may compare the first distance value and the second distance value and identify whether the difference between the first distance value and the second distance value is less than the preset value. When it is identified that the difference between the first distance value and the second distance value is less than the preset value, the processor 130 may identify the distance between the Lidar sensor 100 and the object 200 as the second distance value. For example, it is assumed that the first frequency is 5 MHz, the first distance value corresponding to the first frequency is 0.460 m, the second frequency is 100 MHz, the second distance value corresponding to the second frequency is 0.453 m, and the preset value is 1.4 m. In this case, the processor 130 may identify that the difference between the first distance value and the second distance value is 0.007 m. Accordingly, the processor 130 may identify that the difference between the first distance value and the second distance value is less than the preset value. In this case, the processor 130 may identify that the distance between the Lidar sensor 100 and the object 200 is 0.453 m which is the second distance value.

Meanwhile, according to an embodiment of the disclosure, the processor 130 may identify the distance between the Lidar sensor 100 and the object 200 by outputting the light of the first and second frequencies at each preset time interval. In this case, the processor 130 may identify the distance between the Lidar sensor and the object at the second time based on the first distance value when a difference between a distance identified at a first time adjacent to each other among distances identified at each preset time interval and a distance identified at a second time after the preset time interval from the first time is greater than or equal to the preset value.

As described above, the processor 130 outputs the light of the first frequency and the light of the second frequency in order to identify the distance between a specific point on the object 200 and the Lidar sensor 100. In this case, the light of the first frequency and the light of the second frequency may be output from the light emitting unit at each preset time interval (or preset cycle). In this case, it has been described above that the light of the first frequency and the light of the second frequency corresponding to the specific point may be referred to as an output light (or reflected light) set or pair light. Hereinafter, for convenience of description of the present disclosure, the light of the first frequency and the light of the second frequency corresponding to the same point will be referred to as the output light set.

In this case, the processor 130 may acquire distance values corresponding to each output light set based on the light of the first frequency and the light of the second frequency included in each output light set. Here, the acquired distance value may be a value representing the distance between the Lidar sensor 100 and the object 200 identified based on the above-described first distance value and second distance value. That is, the processor 130 may acquire the first distance value and the second distance value corresponding to each output light set based on the light of the first frequency and the light of the second frequency included in each output light set. The processor 130 may compare the acquired first distance value with the second distance value to acquire distance values corresponding to each output light set. That is, the distance values corresponding to each output light set may be a value obtained by applying the compensation value determined based on the second distance values corresponding to each output light set or the first distance values corresponding to each output light set to the second distance values corresponding to each output light set.

Hereinafter, for convenience of description of the present invention, the distance values corresponding to each output light set will be referred to as the third distance value.

Meanwhile, after acquiring the third distance values corresponding to each output light set, the processor 130 may compare the third distance values between adjacent output light sets. In this case, when the difference between the third distance values between adjacent output light sets is greater than or equal to the preset value, the processor 130 may adjust the third distance value corresponding to the later output light set among the adjacent output light sets.

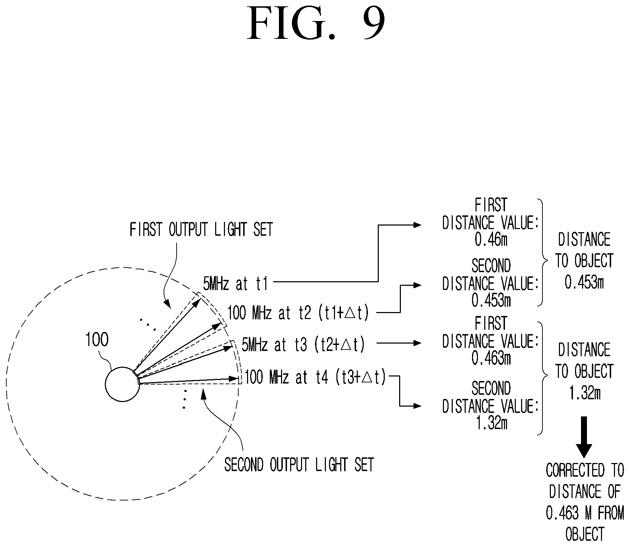

FIG. 9 is a diagram illustrating a method of adjusting a distance between the Lidar sensor identified at a relatively late time and an object when a distance difference between the Lidar sensor identified at an adjacent time and the object is greater than or equal to a preset value according to an embodiment of the disclosure.

Referring to FIG. 9, the processor 130 may output the light of the first frequency output at a time t1 and the light of the second frequency at a time t2. In this case, the processor 130 may identify the distance between the specific point on the object 200 and the Lidar sensor 100 based on the light of the first frequency output at time t1 and the light of the second frequency output at time t2. That is, the processor 130 may identify the light of the first frequency output at time t1 and the light of the second frequency output at time t2 as the first output light set. The processor 130 may output the light of the first frequency output at time t3 and the light of the second frequency at time t4. In this case, the processor 130 may identify the distance between the specific point on the object 200 and the Lidar sensor 100 based on the light of the first frequency output at time t3 and the light of the second frequency output at time t4. That is, the processor 130 may identify the light of the first frequency output at time t3 and the light of the second frequency output at time t4 as the second output light set. In this case, it is assumed that the processor 130 acquires 0.460 m as the first distance value acquired based on the light of the first frequency and 0.453 m as the second distance value acquired based on the light of the second frequency which are included in the first output light set, and 0.463 m as the first distance value acquired based on the light of the first frequency and 1.232 m as the second distance value acquired based on the light of the second frequency which are included in the second output light set. In this case, when it is assumed that a reference value for determining the compensation value based on the first distance value is 1.4 m, the processor 130 may identify the third distance value corresponding to the first output light set as 0.453 m (i.e., the second distance value corresponding to the first output light set to which no compensation value is applied). The processor 130 may identify the third distance value corresponding to the second output light set as 1.232 m (i.e., the second distance value corresponding to the second output light set to which no compensation value is applied). In this case, when it is assumed that the preset value, which is the criterion for determining to adjust the third distance value, is 0.5 m, the processor 130 may identify that the difference (0.779 m) between the third distance value (0.453 m) corresponding to the first output light set and the third distance value (1.232 m) corresponding to the second output light set is a preset value (0.5 m). In this case, the processor 130 may adjust the third distance value corresponding to the second output light set output later in time. That is, the processor 130 may identify that the third distance value corresponding to the second output light set is 0.463 m which is the first distance value.

Meanwhile, according to other embodiments of the disclosure, the processor 130 may not identify the distance between the Lidar sensor 100 and the object 200 at a second time when a difference between a distance identified at a first time adjacent to each other among the distances identified at each preset time interval and a distance identified at a second time after the first time is greater than or equal to the preset value.

Specifically, the processor 130 may exclude the third distance value corresponding to the output light set output later in time from among the plurality of third distance values corresponding to the plurality of output light sets when the difference between the third distance values between adjacent output light sets is greater than or equal to the preset value. That is, the processor 130 may determine that there is an error in the third distance value corresponding to the output light set output later in time when the difference between the third distance values between adjacent output light sets is greater than equal to the preset value, and omit the third distance value determined to be erroneous.

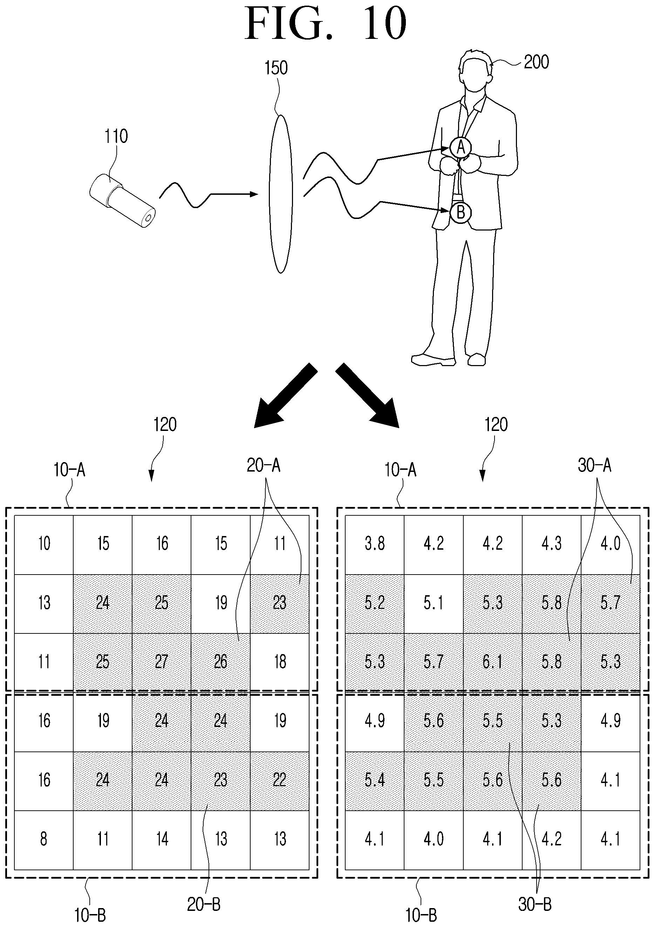

FIG. 10 is a diagram for describing a method of identifying a distance between a plurality of points of an object and a Lidar sensor based on a plurality of pixels classified into a plurality of pixel groups, according to an embodiment of the disclosure.

Meanwhile, according to an embodiment of the disclosure, the processor 130 may identify distances between the Lidar sensor 100 and a plurality of points of the object 200 based on pixel values. To this end, the Lidar sensor 100 may further include a diffusion unit 150.

The diffusion unit may diffuse light output through the light emitting unit 110. More specifically, the light output from the light emitting unit 110 may be diffracted and scattered in a wider range by passing through the diffusion unit 150. Through this, the range of light reaching the object 200 may be expanded. For example, when the light emitting unit 110 outputs a single laser pulse, the single laser pulse output from the light emitting unit may be separated into a plurality of laser pulses through the diffusion unit 150.

In this case, the diffusion unit 150 may include a diffractive optics element (DOE), a diffuser plate, a lens, or the like.

Meanwhile, the plurality of pixels 10 arranged in a matrix form included in the iToF sensor 120 may be divided into the plurality of pixel 10 groups. Here, the plurality of pixel 10 groups may include a plurality of different pixels 10 (or different objects 200) to identify distances to different points on the object 200.

For example, referring to FIG. 10, when it is preset to identify a distance between a first point A and a second point B on the object 200, the processor 130 may divide the plurality of pixels 10 arranged in a $6 \times 5$ matrix into a first pixel group 10-A corresponding to the first point A and a second pixel group 10-B corresponding to the second point B. Specifically, the processor 130 may classify the plurality of pixels 10 arranged in first to third rows into the first pixel group 10-A corresponding to the first point on the object and classify the plurality of pixels 10 arranged in the fourth to sixth rows into the second pixel group 10-B corresponding to the second point on the object.

According to an embodiment of the disclosure, when the diffused light is received by the plurality of pixels 10 by a plurality of different points on the object, the processor 130 may identify the plurality of first pixels 20 and the plurality of second pixels 30 in each of a plurality of groups based on the plurality of acquired pixel values. The processor 130 may identify distances between each of the plurality of points on the object and the Lidar sensor 100 based on the plurality of first pixels and the plurality of second pixels identified in each of the plurality of groups.

Specifically, referring to FIG. 10, the processor 130 may receive the reflected light of the first frequency through the iToF sensor 120 to acquire the first pixel values corresponding to the plurality of pixels 10 included in the first pixel group 10-A. The processor 130 may acquire the first reliability levels based on the plurality of first pixel values of the plurality of pixels 10 included in the first pixel group 10-A. The processor 130 may select the first pixel 20-A of the first pixel group 10-A based on the acquired first reliability levels. The processor 130 may acquire the first distance value corresponding to the first pixel 20-A of the first pixel group 10-A based on the plurality of third pixel values of the selected first pixel 20-A. Similarly, the processor 130 may acquire the second distance value corresponding to the second pixel 30-A of the first pixel group 10-A. The processor 130 may identify the distance between the Lidar sensor 100 and the first point on the object 200 based on the acquired first distance value corresponding to the first pixel 20-A of the first pixel group 10-A and the acquired second distance value corresponding to the second pixel 30-A of the first pixel group 10-A.

Meanwhile, the processor 130 may receive the reflected light of the first frequency through the iToF sensor 120 to acquire the first pixel values corresponding to the plurality of pixels 10 included in the second pixel group 10-B. The processor 130 may acquire the first reliability levels based on the plurality of first pixel values of the plurality of pixels 10 included in the second pixel group 10-B. The processor 130 may select the first pixel 20-B of the second pixel group 10-B based on the acquired first reliability levels. The processor 130 may acquire the first distance value corresponding to the first pixel 20-B of the second pixel group 10-B based on the plurality of third pixel values of the selected first pixel 20-B. Similarly, the processor 130 may acquire the second distance value corresponding to the second pixel 30-B of the second pixel group 10-B. The processor 130 may identify the distance between the Lidar sensor 100 and the second point on the object 200 based on the acquired first distance value corresponding to the first pixel 20-B of the second pixel group 10-B and the acquired second distance value corresponding to the second pixel 30-B of the second pixel group 10-B.

As such, the Lidar sensor 100 according to an embodiment of the disclosure may output light to the object 200 in a wider range than through the diffusion unit, so the distances to a plurality of points on the object may be identified based on the acquired pixel values of the plurality of pixels 10.

Meanwhile, according to an embodiment of the disclosure, at least one or more of the plurality of pixels 10 arranged in a matrix form may be overlapped and included in different pixel groups. In this case, the presence or absence, number, position, etc., of at least one pixel included in each pixel group may be set based on the distance, position, etc., of different points to be identified.

Meanwhile, according to an embodiment of the disclosure, the processor 130 may apply the filter 50 having a preset size to each classified pixel group. That is, the processor 130 may select the plurality of pixels 10 by applying the filter 50 having the preset size to each pixel group, and then identify the first pixel 20 and the second pixel 30 from among the plurality of selected pixels 10. In this regard, the embodiment of the disclosure in which the filter 50 having the preset size is applied to the plurality of pixels 10 described above may be equally applied.

Meanwhile, according to an embodiment of the disclosure, the Lidar sensor 100 may further include a memory and a communication interface.

The memory may store data necessary for various embodiments of the disclosure. For example, a preset first value used to select the first pixel 20, a preset second value used to select the second pixel 30, information on the filter 50 having the preset size, etc., may be stored in the memory.

The communication interface receives various types of information for driving the Lidar sensor 100. For example, the communication interface may receive signals from an external device (e.g., source device), an external storage medium (e.g., USB memory), an external server (e.g., web hard), etc., in a streaming or download method through communication methods such as AP-based Wi-Fi (wireless LAN network), Bluetooth, Zigbee, a wired/wireless local area network (LAN), a wide area network (WAN), Ethernet, IEEE 1394, a high-definition multimedia interface (HDMI), a universal serial bus (UBS), a mobile high-definition link (MHL), an audio engineering society/European broadcasting union (AES/EBU), optical, and coaxial.

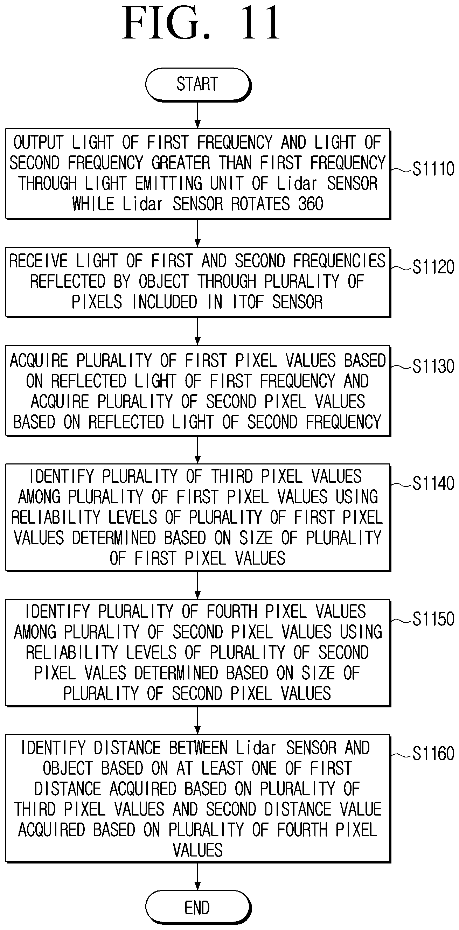

FIG. 11 is a flowchart schematically illustrating a method of controlling a Lidar sensor based on an iToF sensor according to an embodiment of the disclosure.

Referring to FIG. 11, in order to control the iToF sensor-based Lidar sensor 100 according to an embodiment of the disclosure, the processor 130 outputs the light of the first frequency and the light of the second frequency greater than the first frequency through the light emitting unit 110 of the Lidar sensor 100 while the Lidar sensor 100 rotates 360° (S1120).

The processor 130 receives the light of the first frequency and the light of second frequency reflected by the object 200 through the plurality of pixels 10 included in the iToF sensor 120 (S1120).

The processor 130 acquires the plurality of first pixel values based on the reflected light of the first frequency and acquires the plurality of second pixel values based on the reflected light of the second frequency (S1130).

After acquiring the first pixel values and the second pixel values, the processor 130 uses the reliability levels of the plurality of first pixel values determined based on the size of the plurality of first pixel values to identify the plurality of third pixel values among the plurality of first pixel values (S1140).

In this case, according to an embodiment of the disclosure, each of the plurality of pixels 10 may include the first receptor 12 and the second receptor 14. As the reflected light of the first frequency is received through the first receptor 12 and the second receptor 14 included in each of the plurality of pixels 10, the processor 130 may acquire the first value corresponding to the first receptor 12 and the second value corresponding to the second receptor 14 as the plurality of first pixel values.

In this case, the processor 130 may identify each of reliability levels (i.e., first reliability levels) of the plurality of first pixel values based on the following Equation.

$$\text{Reliability level of first pixel value} = \sqrt{(\textit{first value})^2 + (\sec \textit{ond value})^2}$$

Meanwhile, according to an embodiment of the disclosure, the processor 130 may identify the plurality of third pixel values each having a reliability level greater than or equal to a preset value among the plurality of first pixel values based on the reliability levels (i.e., first reliability levels) of the plurality of first pixel values.

After identifying the third pixel values, the processor 130 uses the reliability levels of the plurality of second pixel values determined based on the size of the plurality of second pixel values to identify the plurality of fourth pixel values among the plurality of second pixel values (S1150).

In this case, according to an embodiment of the disclosure, as the reflected light of the second frequency is received through the first receptor 12 and the second receptor 14 included in each of the plurality of pixels 10, the processor 130 may acquire the third value corresponding to the first receptor 12 and the fourth value corresponding to the second receptor 14 as the plurality of second pixel values.

In this case, the processor 130 may identify each of reliability levels (i.e., second reliability levels) of the plurality of second pixel values based on the following Equation.

$$\text{Reliability level of second pixel value} = \sqrt{(third\ value)^2 + (fourth\ value)^2}$$

Meanwhile, according to an embodiment of the disclosure, the processor 130 may identify the plurality of fourth pixel values each having a reliability level greater than or equal to a preset value among the plurality of second pixel values based on the reliability levels (i.e., second reliability levels) of the plurality of second pixel values.

After identifying the plurality of third pixel values and the plurality of fourth pixel values, the processor 130 identifies a distance between the Lidar sensor 100 and the object 200 based on at least one of the first distance value acquired based on the plurality of third pixel values and the second distance value obtained based on the plurality of fourth pixel values (S1160).

Meanwhile, according to an embodiment of the disclosure, the processor 130 may identify the plurality of distance values based on the plurality of third pixel values and identify the first distance value based on an average value of the plurality of identified distance values. The processor 130 may identify the plurality of distance values based on the plurality of fourth pixel values and identify the second distance value based on an average value of the plurality of identified distance values.

Also, according to an embodiment of the disclosure, the processor 130 may identify, as the first distance value, the distance value corresponding to the largest reliability level among the plurality of distance values identified based on the plurality of third pixel values. The processor 130 may identify, as the second distance value, the distance value corresponding to the largest reliability level among the plurality of distance values identified based on the plurality of fourth pixel values.

In addition, according to an embodiment of the disclosure, the processor 130 may identify the distance between the Lidar sensor 100 and the object 200 by outputting the light of the first frequency and the second frequency at each preset time interval. The processor 130 may identify the distance between the Lidar sensor and the object at the second time based on the first distance value when a difference between a distance identified at a first time adjacent to each other among distances identified at each preset time interval and a distance identified at a second time after the preset time interval from the first time is greater than or equal to the preset value.

Meanwhile, prior to identifying the plurality of third pixel values and the plurality of fourth pixel values, the processor 130 may apply the filter 50 having the preset size to the plurality of pixels 10 to acquire the plurality of filtered pixels 10.

In this case, the processor 130 may identify the plurality of third pixel values based on the first pixel values of the plurality of pixels 10 filtered in step S1140. That is, the processor 130 may identify the first reliability level of each of the plurality of filtered pixels 10 based on the plurality of first pixel values corresponding to each of the plurality of filtered pixels 10. The processor 130 may identify the plurality of third pixel values among the plurality of first pixels 20 based on the first reliability level of each of the plurality of filtered pixels 10.

The processor 130 may identify the plurality of fourth pixel values based on the second pixel values of the plurality of pixels 10 filtered in step S1150. That is, the processor 130 may identify the second reliability level of each of the plurality of filtered pixels 10 based on the plurality of second pixel values corresponding to each of the plurality of filtered pixels 10. The processor 130 may identify the plurality of fourth pixel values among the plurality of second pixels 30 based on the second reliability level of each of the plurality of filtered pixels 10.

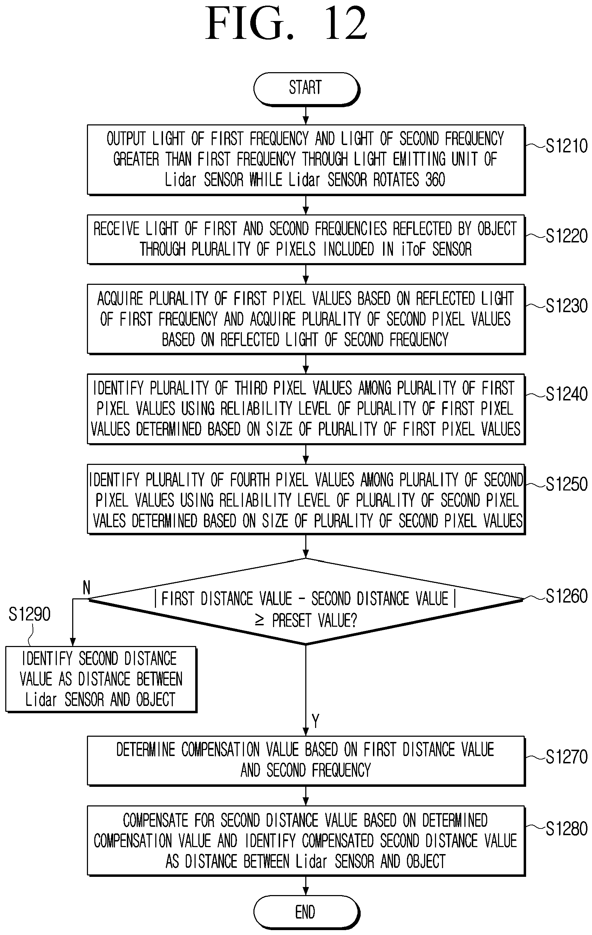

FIG. 12 is a flowchart schematically illustrating a method of controlling a Lidar sensor based on an iToF sensor according to an embodiment of the disclosure.

Steps S1210 to S1250 illustrated in FIG. 12 may correspond to steps S1110 to 1150 illustrated in FIG. 11. Therefore, a detailed description thereof will be omitted.

Referring to FIG. 12, the processor 130 may identify whether the difference between the first distance value and the second distance value is greater than or equal to the preset value (S1260). In this case, the preset value may be set based on the second frequency.

The processor 130 may determine the compensation value based on the first distance value and the second frequency when it is identified that the difference between the first distance value and the second distance value is greater than or equal to the preset value (S1270).

The processor 130 may compensate for the second distance value based on the determined compensation value, and identify the compensated second distance value as the distance between the Lidar sensor 100 and the object 200 (S1280).

Meanwhile, when the difference between the first distance value and the second distance value is less than the preset value, the processor 130 may identify the second distance value as the distance between the Lidar sensor 100 and the object 200.

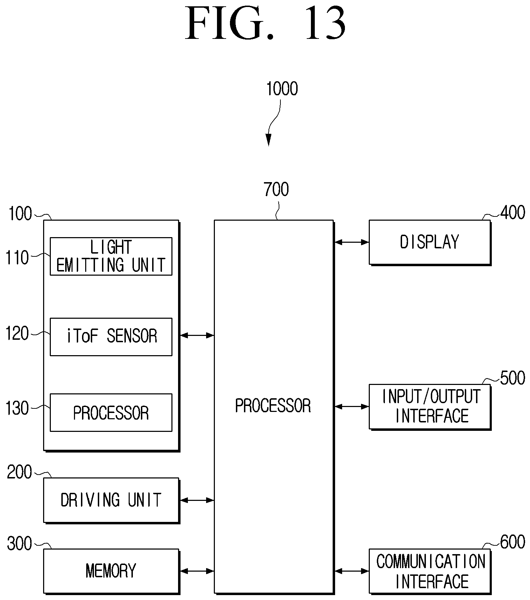

FIG. 13 is a schematic block diagram of a robot including a Lidar sensor based on an iToF sensor according to an embodiment of the disclosure.

Meanwhile, the iToF sensor-based Lidar sensor 100 according to an embodiment of the disclosure may be included in a robot 1000. Through the iToF sensor-based Lidar sensor 100, the robot 1000 may detect the object 200 around the robot 1000, and identify the distance between the detected object 200 and the robot 1000.

According to an embodiment of the disclosure, the robot 1000 may include the Lidar sensor 100, the driving unit 200, a memory 300, a display 400, an input/output interface 500, a communication interface 600, and a processor 700. Since the Lidar sensor 100 has been described above, a detailed description thereof will be omitted.

The driving unit 200 is a component for moving the robot 1000. The driving unit 200 may be implemented as wheels, legs, or the like of the robot 1000. To this end, the driving unit 200 may include a motor.

The memory 300 may store data required for various embodiments of the iToF-based Lidar sensor 100 of the disclosure or various data used to drive the robot 1000. The memory 300 may be implemented in the form of the memory 300 embedded in the robot 1000 or in the form of the memory 300 that is detachable from the robot 1000 according to data storage purposes. For example, data for driving the robot 1000 may be stored in the memory 300 embedded in the robot 1000, and data for extended functions of the robot 1000 may be stored in the memory 300 that is detachable from the robot 1000.

Meanwhile, the memory 300 embedded in the robot 1000 may include at least one of, for example, a volatile memory (for example, a dynamic random access memory (DRAM), a static RAM (SRAM), a synchronous dynamic RAM (SDRAM), or the like), a nonvolatile memory (for example, a one time programmable read only memory (OTPROM), a programmable ROM (PROM), an erasable and programmable ROM (EPROM), an electrically erasable and programmable ROM (EEPROM), a mask ROM, a flash ROM, or the like), a flash memory (for example, a NAND flash, a NOR flash, or the like), a hard drive, and a solid state drive (SSD)).

In addition, the memory 300 detachable from the robot 1000 may be implemented in the form of the memory 300 card (e.g., compact flash (CF), secure digital (SD), micro secure digital (Micro-SD), mini secure digital (Mini-SD), extreme digital (xD), multimedia card (MMC), etc.), external memory (e.g., USB memory) connectable to a USB port, and the like.

The display 400 may display various types of visual information. For example, the display 400 may display driving path information or the like of the robot 1000. Meanwhile, the display 400 may be implemented by various types of displays such as a liquid crystal display (LCD), organic light emitting diodes (OLED) display, quantum dot light-emitting diodes (QLED) display, a plasma display panel (PDP), and the like. A driving circuit, a backlight unit, and the like, that may be implemented in a form such as TFT, low temperature poly silicon (LTPS) TFT, an organic TFT (OTFT), and the like, may be included in the display 150. Meanwhile, the display 400 may be implemented as a flexible display, a 3D display, or the like.

The input/output interface 500 is a component used for the robot 1000 to interact with a user, and the processor 700 may receive various types of information about a driving space through the input/output interface 500. Meanwhile, the input/output interface 500 may include at least one of a touch sensor, a motion sensor, a button, a jog dial, a switch, or a speaker, but is not limited thereto.

The communication interface 600 may input and output various types of data. For example, the communication interface 600 may transmit and receive various types of data to and from an external device (e.g., source device), an external storage medium (e.g., USB memory), an external server (e.g., web hard), etc., through communication methods such as AP-based Wi-Fi (wireless LAN network), Bluetooth, Zigbee, a wired/wireless local area network (LAN), a wide area network (WAN), Ethernet, IEEE 1394, a high-definition multimedia interface (HDMI), a universal serial bus (UBS), a mobile high-definition link (MHL), an audio engineering society/European broadcasting union (AES/EBU), optical, and coaxial.

The processor 700 may control a general operation of the robot 1000. To this end, the processor 700 may be connected to the Lidar sensor 100 to acquire the distance information between the robot 1000 and the object 200 from the Lidar sensor 100. Alternatively, the processor 700 may control the driving unit 200 to control various driving operations such as movement, stop, speed control, and direction change of the robot 1000.

Meanwhile, various embodiments described above may be implemented by software including instructions stored in a machine-readable storage medium (for example, a computer-readable storage medium). A machine is a device capable of calling a stored instruction from a storage medium and operating according to the called instruction, and may include the Lidar sensor 100 of the embodiments disclosed. In the case in which a command is executed by the processor 130, the processor 130 may directly perform a function corresponding to the command or other components may perform the function corresponding to the command under a control of the processor. The command may include codes created or executed by a compiler or an interpreter. The machine-readable storage medium may be provided in a form of a non-transitory storage medium. Here, the term "non-transitory" means that the storage medium is tangible without including a signal, and does not distinguish whether data are semi-permanently or temporarily stored in the storage medium.

In addition, the above-described methods according to the diverse embodiments may be included and provided in a computer program product. The computer program product may be traded as a product between a seller and a purchaser. The computer program product may be distributed in a form of a storage medium (for example, a compact disc read only memory (CD-ROM)) that may be read by the machine or online through an application store (for example, PlayStore™). In case of the online distribution, at least a portion of the computer program product may be at least temporarily stored in a storage medium such as a memory of a server of a manufacturer, a server of an application store, or a relay server or be temporarily generated.

In addition, each of components (for example, modules or programs) according to various embodiments described above may include a single entity or a plurality of entities, and some of the corresponding sub-components described above may be omitted or other sub-components may be further included in the diverse embodiments. Alternatively or additionally, some components (e.g., modules or programs) may be integrated into one entity and perform the same or similar functions performed by each corresponding component prior to integration. Operations performed by the modules, the programs, or the other components according to the diverse embodiments may be executed in a sequential manner, a parallel manner, an iterative manner, or a heuristic manner, at least some of the operations may be performed in a different order or be omitted, or other operations may be added.

Although exemplary embodiments of the disclosure have been illustrated and described hereinabove, the disclosure is not limited to the abovementioned specific exemplary embodiments, but may be variously modified by those skilled in the art to which the disclosure pertains without departing from the gist of the disclosure as disclosed in the accompanying claims. These modifications should also be understood to fall within the scope and spirit of the disclosure.

**Claims**

1. A Lidar sensor comprising:

   a light emitting unit;
   an indirect time of flight (iToF) sensor comprising a plurality of pixels; and
   one or more processors configured to:

   output light of a first frequency and light of a second frequency greater than the first frequency through the light emitting unit while the Lidar sensor rotates,
   based on the output light of the first frequency and the output light of the second frequency being reflected by an object and received by the plurality of pixels, acquire a plurality of first pixel values based on the reflected light of the first frequency, and acquire a plurality of second pixel values based on the reflected light of the second frequency,
   identify a plurality of third pixel values from among the plurality of first pixel values using reliability levels of the plurality of first pixel values determined based on a size of the plurality of first pixel values and identify a plurality of fourth pixel values from among the plurality of second pixel values using reliability levels of the plurality of second pixel values determined based on a size of the plurality of second pixel values, and
   identify a distance between the Lidar sensor and the object based on at least one of a first distance value acquired based on the plurality of third pixel values and a second distance value acquired based on the plurality of fourth pixel values.

2. The Lidar sensor as claimed in claim 1, wherein the one or more processors are further configured to:

   identify the plurality of third pixel values each having a reliability level greater than or equal to a first preset value from among the plurality of first pixel values based on the reliability levels of the plurality of first pixel values, and
   identify the plurality of fourth pixel values each having a reliability level greater than or equal to a second preset value from among the plurality of second pixel values based on the reliability levels of the plurality of second pixel values, and
   wherein each of the reliability levels of the plurality of first pixel values and the reliability levels of the plurality of second pixel values is higher as a size of a pixel value of the plurality of first pixel values and the plurality of the second pixel values increases.

3. The Lidar sensor as claimed in claim 2, wherein the one or more processors are further configured to acquire a plurality of filtered pixels by applying a filter having a preset size to the plurality of pixels, and identify the plurality of third pixel values and the plurality of fourth pixel values based on pixel values of the plurality of filtered pixels.

4. The Lidar sensor as claimed in claim 1, wherein the one or more processors are further configured to:

   identify a plurality of distance values based on the plurality of third pixel values and identify the first distance value based on an average value of the plurality of identified distance values, and
   identify a plurality of distance values based on the plurality of fourth pixel values and identify the second distance value based on the average value of the plurality of identified distance values.

5. The Lidar sensor as claimed in claim 1, wherein the one or more processors are further configured to:

   identify, as the first distance value, a distance value corresponding to the largest reliability level among a plurality of distance values identified based on the plurality of third pixel values, and
   identify, as the second distance value, a distance value corresponding to the largest reliability level among a plurality of distance values identified based on the plurality of fourth pixel values.

6. The Lidar sensor as claimed in claim 1, wherein the one or more processors are further configured to:

   determine a compensation value based on the first distance value and the second frequency based on a difference between the first distance value and the second distance value being greater than or equal to a preset value,
   compensate for the second distance value based on the determined compensation value, and
   identify the compensated second distance value as the distance between the Lidar sensor and the object.

7. The Lidar sensor as claimed in claim 1, wherein the one or more processors are further configured to identify the second distance value as the distance between the Lidar sensor and the object based on a difference between the first distance value and the second distance value being less than a preset value.

8. The Lidar sensor as claimed in claim 1, wherein the one or more processors are further configured to:

   output the light of the first frequency and the light of the second frequency at each preset time interval to identify the distance between the Lidar sensor and the object, and
   based on a difference between a distance identified at a first time and a distance identified at a second time among distances identified at each preset time interval being greater than or equal to a preset value, identify the distance between the Lidar sensor and the object at the second time based on the first distance value, and
   wherein the second time is a time after the preset time interval from the first time.

9. The Lidar sensor as claimed in claim 1, wherein the plurality of first pixel values corresponding to one of the plurality of pixels include a first value and a second value, and the plurality of second pixel values corresponding to one of the plurality of pixels include a third value and a fourth value, and
   wherein the one or more processor are further configured to identify each of the reliability levels of the plurality of first pixel values and each of the reliability levels of the plurality of second pixel values based on the following Equations, respectively.

$$\text{Reliability level of first pixel value} = \sqrt{(first\ value)^2 + (\sec ond\ value)^2}$$

$$\text{Reliability level of second pixel value} = \sqrt{(third\ value)^2 + (fourth\ value)^2}$$

10. The Lidar sensor as claimed in claim 1, wherein each of the plurality of pixels comprises a plurality of receptors configured to be activated at preset time intervals.

**11.** A method of controlling a Lidar sensor including an indirect time of flight (iToF) sensor, the method comprising:

outputting light of a first frequency and light of a second frequency greater than the first frequency through a light emitting unit of the Lidar sensor while the Lidar sensor rotates;

receiving the light of the first frequency and the light of the second frequency reflected by an object through a plurality of pixels included in the iToF sensor;

acquiring a plurality of first pixel values based on the reflected light of the first frequency and acquiring a plurality of second pixel values based on the reflected light of the second frequency;

identifying a plurality of third pixel values from among the plurality of first pixel values using reliability levels of the plurality of first pixel values determined based on a size of the plurality of first pixel values;

identifying a plurality of fourth pixel values from among the plurality of second pixel values using reliability levels of the plurality of second pixel values determined based on a size of the plurality of second pixel values; and

identifying a distance between the Lidar sensor and the object based on at least one of a first distance value acquired based on the plurality of third pixel values and a second distance value acquired based on the plurality of fourth pixel values.

**12.** The method as claimed in claim 11, wherein the identifying of the plurality of third pixel values comprises identifying the plurality of third pixel values each having a reliability level greater than or equal to a first preset value from among the plurality of first pixel values based on the reliability levels of the plurality of first pixel values,

wherein the identifying of the plurality of fourth pixel values comprises identifying the plurality of fourth pixel values each having a reliability level greater than or equal to a second preset value from among the plurality of second pixel values based on the reliability levels of the plurality of second pixel values, and

wherein each of the reliability levels of the plurality of first pixel values and the reliability levels of the plurality of second pixel values is higher as a size of a pixel value of the plurality of first pixel values and the plurality of second pixel values increases.

**13.** The method as claimed in claim 12, further comprising acquiring a plurality of filtered pixels by applying a filter having a preset size to the plurality of pixels,

wherein the identifying of the plurality of third pixel values comprises identifying the plurality of third pixel values based on the first pixel values of the plurality of filtered pixels, and

wherein the identifying of the plurality of fourth pixel values comprises identifying the plurality of fourth pixel values based on the second pixel values of the plurality of filtered pixels.

**14.** The method as claimed in claim 11, wherein the identifying of the distance comprises:

identifying a plurality of distance values based on the plurality of third pixel values and identifying the first distance value based on an average value of the plurality of identified distance values; and

identifying a plurality of distance values based on the plurality of fourth pixel values and identifying the second distance value based on the average value of the plurality of identified distance values.

**15.** The method as claimed in claim 11, wherein the identifying of the distance comprises:

identifying, as the first distance value, a distance value corresponding to the largest reliability level among a plurality of distance values identified based on the plurality of third pixel values; and

identifying, as the second distance value, a distance value corresponding to the largest reliability level among a plurality of distance values identified based on the plurality of fourth pixel values.

# FIG. 1

# FIG. 2

100

110 LIGHT EMITTING UNIT

120 iToF SENSOR

130 PROCESSOR

# FIG. 3

120

12  14

10

Tp

110

t1        t2

Δt

t3

12        Q1

14        Q2

Δt

Tp

200

# FIG. 4

120

| 1 | 4 | 4 | 5 | 4 | 5 | 4 | 5 | 2 | 3 |
|---|---|---|---|---|---|---|---|---|---|
| 4 | 5 | 9 | 13 | 10 | 13 | 11 | 15 | 4 | 6 |
| 4 | 6 | 10 | 13 | 11 | 15 | 11 | 15 | 4 | 6 |
| 4 | 5 | 10 | 14 | 11 | 14 | 11 | 15 | 3 | 5 |
| 2 | 4 | 4 | 5 | 4 | 5 | 4 | 6 | 2 | 3 |

# FIG. 5

EP 4 478 089 A1

120

| 1 | 4 | 4 | 5 | 4 | 5 | 4 | 5 | 2 | 3 |
|---|---|---|---|---|---|---|---|---|---|
| 4 | 5 | 9 | 13 | 10 | 13 | 11 | 15 | 4 | 6 |
| 4 | 6 | 10 | 13 | 11 | 15 | 11 | 15 | 4 | 6 |
| 4 | 5 | 10 | 14 | 11 | 14 | 11 | 15 | 3 | 5 |
| 2 | 4 | 4 | 5 | 4 | 5 | 4 | 6 | 2 | 3 |

5MHz

120

| 0.5 | 0.8 | 0.8 | 1.0 | 0.8 | 1.0 | 0.8 | 1.0 | 0.6 | 0.7 |
|-----|-----|-----|-----|-----|-----|-----|-----|-----|-----|
| 0.8 | 1.0 | 1.8 | 2.6 | 2.0 | 2.6 | 2.2 | 3.0 | 0.8 | 1.2 |
| 0.8 | 1.2 | 2.0 | 2.6 | 2.2 | 3.0 | 2.2 | 3.0 | 0.8 | 1.2 |
| 0.8 | 1.0 | 2.0 | 2.8 | 2.2 | 2.8 | 2.2 | 3.0 | 0.7 | 1.0 |
| 0.6 | 0.8 | 0.8 | 1.0 | 0.8 | 1.0 | 0.8 | 1.2 | 0.6 | 0.7 |

100MHz

# FIG. 6

120

10

| 10 | 15 | 16 | 15 | 11 |
| 13 | 24 | 25 | 19 | 23 |
| 22 | 25 | 27 | 26 | 18 |
| 16 | 19 | 24 | 24 | 21 |
| 8 | 11 | 14 | 13 | 13 |

20

5MHz

120

10

| 3.8 | 4.2 | 4.2 | 4.3 | 4.0 |
| 5.2 | 5.1 | 5.3 | 5.8 | 5.7 |
| 5.3 | 5.7 | 6.1 | 5.8 | 5.3 |
| 4.9 | 5.6 | 5.5 | 5.3 | 4.9 |
| 4.1 | 4.0 | 4.1 | 4.2 | 4.1 |

30

100MHz

# FIG. 7

5MHz

100MHz

# FIG. 8

120

10

| 10<br>(1.57m) | 15<br>(1.62m) | 16<br>(1.63m) | 15<br>(1.62m) | 11<br>(1.58m) |
| 13<br>(1.60m) | 24<br>(1.71m) | 25<br>(1.72m) | 19<br>(1.66m) | 23<br>(1.70m) |
| 22<br>(1.69m) | 25<br>(1.72m) | 27<br>(1.74m) | 26<br>(1.73m) | 18<br>(1.65m) |
| 16<br>(1.63m) | 19<br>(1.66m) | 24<br>(1.71m) | 24<br>(1.71m) | 21<br>(1.68m) |
| 8<br>(1.58m) | 11<br>(1.58m) | 14<br>(1.61m) | 13<br>(1.60m) | 13<br>(1.60m) |

20

5MHz

120

10

| 3.8<br>(0.18m) | 4.2<br>(0.20m) | 4.2<br>(0.20m) | 4.3<br>(0.205m) | 4.0<br>(0.19m) |
| 5.2<br>(0.25m) | 5.1<br>(0.245m) | 5.3<br>(0.255m) | 5.8<br>(0.28m) | 5.7<br>(0.275m) |
| 5.3<br>(0.255m) | 5.7<br>(0.275m) | 6.1<br>(0.295m) | 5.8<br>(0.28m) | 5.3<br>(0.255m) |
| 4.9<br>(0.235m) | 5.6<br>(0.27m) | 5.5<br>(0.265m) | 5.3<br>(0.255m) | 4.9<br>(0.235m) |
| 4.1<br>(0.195m) | 4.0<br>(0.19m) | 4.1<br>(0.195m) | 4.2<br>(0.2m) | 4.1<br>(0.195m) |

30

100MHz

# FIG. 9

FIRST OUTPUT LIGHT SET

5MHz at t1

100 MHz at t2 (t1+△t)

100

5MHz at t3 (t2+△t)

100 MHz at t4 (t3+△t)

SECOND OUTPUT LIGHT SET

FIRST
DISTANCE VALUE:
0.46m

SECOND
DISTANCE VALUE:
0.453m

} DISTANCE
TO OBJECT
0.453m

FIRST
DISTANCE VALUE:
0.463m

SECOND
DISTANCE VALUE:
1.32m

} DISTANCE
TO OBJECT
1.32m

CORRECTED TO
DISTANCE OF
0.463 M FROM
OBJECT

# FIG. 10

| 10 | 15 | 16 | 15 | 11 |
|----|----|----|----|----|
| 13 | 24 | 25 | 19 | 23 |
| 11 | 25 | 27 | 26 | 18 |
| 16 | 19 | 24 | 24 | 19 |
| 16 | 24 | 24 | 23 | 22 |
| 8  | 11 | 14 | 13 | 13 |

| 3.8 | 4.2 | 4.2 | 4.3 | 4.0 |
|-----|-----|-----|-----|-----|
| 5.2 | 5.1 | 5.3 | 5.8 | 5.7 |
| 5.3 | 5.7 | 6.1 | 5.8 | 5.3 |
| 4.9 | 5.6 | 5.5 | 5.3 | 4.9 |
| 5.4 | 5.5 | 5.6 | 5.6 | 4.1 |
| 4.1 | 4.0 | 4.1 | 4.2 | 4.1 |

# FIG. 11

START

OUTPUT LIGHT OF FIRST FREQUENCY AND LIGHT OF SECOND FREQUENCY GREATER THAN FIRST FREQUENCY THROUGH LIGHT EMITTING UNIT OF Lidar SENSOR WHILE Lidar SENSOR ROTATES 360 ~S1110

RECEIVE LIGHT OF FIRST AND SECOND FREQUENCIES REFLECTED BY OBJECT THROUGH PLURALITY OF PIXELS INCLUDED IN ITOF SENSOR ~S1120

ACQUIRE PLURALITY OF FIRST PIXEL VALUES BASED ON REFLECTED LIGHT OF FIRST FREQUENCY AND ACQUIRE PLURALITY OF SECOND PIXEL VALUES BASED ON REFLECTED LIGHT OF SECOND FREQUENCY ~S1130

IDENTIFY PLURALITY OF THIRD PIXEL VALUES AMONG PLURALITY OF FIRST PIXEL VALUES USING RELIABILITY LEVELS OF PLURALITY OF FIRST PIXEL VALUES DETERMINED BASED ON SIZE OF PLURALITY OF FIRST PIXEL VALUES ~S1140

IDENTIFY PLURALITY OF FOURTH PIXEL VALUES AMONG PLURALITY OF SECOND PIXEL VALUES USING RELIABILITY LEVELS OF PLURALITY OF SECOND PIXEL VALES DETERMINED BASED ON SIZE OF PLURALITY OF SECOND PIXEL VALUES ~S1150

IDENTIFY DISTANCE BETWEEN Lidar SENSOR AND OBJECT BASED ON AT LEAST ONE OF FIRST DISTANCE ACQUIRED BASED ON PLURALITY OF THIRD PIXEL VALUES AND SECOND DISTANCE VALUE ACQUIRED BASED ON PLURALITY OF FOURTH PIXEL VALUES ~S1160

END

# FIG. 12

START

OUTPUT LIGHT OF FIRST FREQUENCY AND LIGHT OF SECOND FREQUENCY GREATER THAN FIRST FREQUENCY THROUGH LIGHT EMITTING UNIT OF Lidar SENSOR WHILE Lidar SENSOR ROTATES 360 — S1210

RECEIVE LIGHT OF FIRST AND SECOND FREQUENCIES REFLECTED BY OBJECT THROUGH PLURALITY OF PIXELS INCLUDED IN iToF SENSOR — S1220

ACQUIRE PLURALITY OF FIRST PIXEL VALUES BASED ON REFLECTED LIGHT OF FIRST FREQUENCY AND ACQUIRE PLURALITY OF SECOND PIXEL VALUES BASED ON REFLECTED LIGHT OF SECOND FREQUENCY — S1230

IDENTIFY PLURALITY OF THIRD PIXEL VALUES AMONG PLURALITY OF FIRST PIXEL VALUES USING RELIABILITY LEVEL OF PLURALITY OF FIRST PIXEL VALUES DETERMINED BASED ON SIZE OF PLURALITY OF FIRST PIXEL VALUES — S1240

IDENTIFY PLURALITY OF FOURTH PIXEL VALUES AMONG PLURALITY OF SECOND PIXEL VALUES USING RELIABILITY LEVEL OF PLURALITY OF SECOND PIXEL VALES DETERMINED BASED ON SIZE OF PLURALITY OF SECOND PIXEL VALUES — S1250

N ← | FIRST DISTANCE VALUE − SECOND DISTANCE VALUE | ≥ PRESET VALUE? — S1260

S1290

IDENTIFY SECOND DISTANCE VALUE AS DISTANCE BETWEEN Lidar SENSOR AND OBJECT

Y

DETERMINE COMPENSATION VALUE BASED ON FIRST DISTANCE VALUE AND SECOND FREQUENCY — S1270

COMPENSATE FOR SECOND DISTANCE VALUE BASED ON DETERMINED COMPENSATION VALUE AND IDENTIFY COMPENSATED SECOND DISTANCE VALUE AS DISTANCE BETWEEN Lidar SENSOR AND OBJECT — S1280

END

# FIG. 13

1000

700

100

110 LIGHT EMITTING UNIT

120 iToF SENSOR

130 PROCESSOR

200 DRIVING UNIT

300 MEMORY

PROCESSOR

400 DISPLAY

500 INPUT/OUTPUT INTERFACE

600 COMMUNICATION INTERFACE

## INTERNATIONAL SEARCH REPORT

| International application No. |
|---|
| **PCT/KR2023/012038** |

### A. CLASSIFICATION OF SUBJECT MATTER

**G01S 17/34**(2020.01)i; **G01S 7/4913**(2020.01)i; **G01S 7/497**(2006.01)i; **G01S 17/894**(2020.01)i; **G01S 17/10**(2006.01)i; **G01S 7/4865**(2020.01)i; **G01S 7/481**(2006.01)i

According to International Patent Classification (IPC) or to both national classification and IPC

### B. FIELDS SEARCHED

Minimum documentation searched (classification system followed by classification symbols)

G01S 17/34(2020.01); G01C 3/06(2006.01); G01S 17/10(2006.01); G01S 17/89(2006.01); G01S 17/894(2020.01); G01S 7/486(2006.01)

Documentation searched other than minimum documentation to the extent that such documents are included in the fields searched

Korean utility models and applications for utility models: IPC as above
Japanese utility models and applications for utility models: IPC as above

Electronic data base consulted during the international search (name of data base and, where practicable, search terms used)

eKOMPASS (KIPO internal) & keywords: 라이다(lidar), ITOF, 주파수(frequency), 픽셀(pixel), 신뢰도(confidence level)

### C. DOCUMENTS CONSIDERED TO BE RELEVANT

| Category* | Citation of document, with indication, where appropriate, of the relevant passages | Relevant to claim No. |
|---|---|---|
| Y | KR 10-2020-0127849 A (SAMSUNG ELECTRONICS CO., LTD.) 11 November 2020 (2020-11-11)<br>See paragraphs [0003] and [0024]-[0053]; claims 6-8; and figures 1-6. | 1-15 |
| Y | KR 10-2022-0047155 A (SAMSUNG ELECTRONICS CO., LTD.) 15 April 2022 (2022-04-15)<br>See paragraphs [0045]-[0130]; claim 1; and figures 1-9e. | 1-15 |
| A | KR 10-2019-0032789 A (INDUSTRY-ACADEMIC COOPERATION FOUNDATION, YONSEI UNIVERSITY et al.) 28 March 2019 (2019-03-28)<br>See paragraphs [0048]-[0109]; claims 1-17; and figures 1-7. | 1-15 |
| A | EP 3015882 A1 (PANASONIC INTELLECTUAL PROPERTY MANAGEMENT CO., LTD.) 04 May 2016 (2016-05-04)<br>See paragraphs [0014]-[0054]; claims 1-10; and figures 1-16. | 1-15 |
| A | WO 2020-241294 A1 (SONY CORPORATION) 03 December 2020 (2020-12-03)<br>See paragraphs [0013]-[0221]; claims 1-19; and figures 1-27. | 1-15 |

☐ Further documents are listed in the continuation of Box C.     ☑ See patent family annex.

| | |
|---|---|
| * Special categories of cited documents:<br>"A" document defining the general state of the art which is not considered to be of particular relevance<br>"D" document cited by the applicant in the international application<br>"E" earlier application or patent but published on or after the international filing date<br>"L" document which may throw doubts on priority claim(s) or which is cited to establish the publication date of another citation or other special reason (as specified)<br>"O" document referring to an oral disclosure, use, exhibition or other means<br>"P" document published prior to the international filing date but later than the priority date claimed | "T" later document published after the international filing date or priority date and not in conflict with the application but cited to understand the principle or theory underlying the invention<br>"X" document of particular relevance; the claimed invention cannot be considered novel or cannot be considered to involve an inventive step when the document is taken alone<br>"Y" document of particular relevance; the claimed invention cannot be considered to involve an inventive step when the document is combined with one or more other such documents, such combination being obvious to a person skilled in the art<br>"&" document member of the same patent family |

| Date of the actual completion of the international search | Date of mailing of the international search report |
|---|---|
| **04 December 2023** | **04 December 2023** |

| Name and mailing address of the ISA/KR | Authorized officer |
|---|---|
| **Korean Intellectual Property Office**<br>**Government Complex-Daejeon Building 4, 189 Cheongsa-ro, Seo-gu, Daejeon 35208** | |
| Facsimile No. **+82-42-481-8578** | Telephone No. |

Form PCT/ISA/210 (second sheet) (July 2022)

# EP 4 478 089 A1

<table>
<tr><td colspan="2">INTERNATIONAL SEARCH REPORT<br>Information on patent family members</td><td colspan="2">International application No.<br>**PCT/KR2023/012038**</td></tr>
</table>

| Patent document cited in search report | | | Publication date (day/month/year) | Patent family member(s) | | | Publication date (day/month/year) |
|---|---|---|---|---|---|---|---|
| KR | 10-2020-0127849 | A | 11 November 2020 | US | 10878589 | B2 | 29 December 2020 |
| | | | | US | 11694350 | B2 | 04 July 2023 |
| | | | | US | 2020-0349728 | A1 | 05 November 2020 |
| | | | | US | 2021-0174525 | A1 | 10 June 2021 |
| | | | | US | 2023-0298190 | A1 | 21 September 2023 |
| KR | 10-2022-0047155 | A | 15 April 2022 | CN | 116685870 | A | 01 September 2023 |
| | | | | EP | 4180842 | A1 | 17 May 2023 |
| | | | | US | 2022-0120902 | A1 | 21 April 2022 |
| | | | | WO | 2022-075792 | A1 | 14 April 2022 |
| KR | 10-2019-0032789 | A | 28 March 2019 | EP | 3460517 | A1 | 27 March 2019 |
| | | | | KR | 10-2016942 | B1 | 02 September 2019 |
| | | | | US | 10935658 | B2 | 02 March 2021 |
| | | | | US | 2019-0086540 | A1 | 21 March 2019 |
| EP | 3015882 | A1 | 04 May 2016 | EP | 3015882 | A4 | 29 June 2016 |
| | | | | EP | 3015882 | B1 | 09 December 2020 |
| | | | | JP | 6296401 | B2 | 20 March 2018 |
| | | | | US | 10422859 | B2 | 24 September 2019 |
| | | | | US | 2016-0178734 | A1 | 23 June 2016 |
| | | | | WO | 2014-207983 | A1 | 31 December 2014 |
| WO | 2020-241294 | A1 | 03 December 2020 | CN | 113874750 | A | 31 December 2021 |
| | | | | US | 2022-0317269 | A1 | 06 October 2022 |